(19) Europäisches Patentamt
European Patent Office
Office européen des brevets

(11) Numéro de publication: **0 117 799**
**B1**

# (12) FASCICULE DE BREVET EUROPÉEN

(45) Date de publication du fascicule du brevet: **20.05.87**

(51) Int. Cl.⁴: **C 01 B 33/107**, C 07 F 7/12

(21) Numéro de dépôt: **84400277.4**

(22) Date de dépôt: **10.02.84**

(54) **Procédé de dismutation de silanes.**

(30) Priorité: **25.02.83 FR 8303089**

(43) Date de publication de la demande: **05.09.84 Bulletin 84/36**

(45) Mention de la délivrance du brevet: **20.05.87 Bulletin 87/21**

(84) Etats contractants désignés: **AT BE CH DE FR GB IT LI NL SE**

(56) Documents cité:
**EP-A-0 046 706**
**FR-A-2 026 481**
**FR-A-2 052 947**
**FR-A-2 096 605**
**FR-A-2 118 725**
**FR-A-2 261 977**
**FR-A-2 450 120**

**ANGEWANDTE CHEMIE, vol. 18, no. 6, juin 1979, pages 421-492, Weinheim, DE., S.L. REGEN: "Triphase catalysis. New synthetic methods (27)"**

(73) Titulaire: **RHONE- POULENC SPECIALITES CHIMIQUES, "Les Miroirs" 18, Avenue d'Alsace, F-92400 Courbevoie (FR)**

(72) Inventeur: **Lepage, Jean- Luc, 81, Chemin de Chavril, F-69110 Sainte- Foy- lès- Lyon (FR)**
Inventeur: **Soula, Gérard, 33, rue Nungesser, F-69330 Meyzieu (FR)**

(74) Mandataire: **Fabre, Madeleine- France, RHONE- POULENC INTERSERVICES Service Brevets Chimie 25, quai Paul Doumer, F-92408 Courbevoie Cédex (FR)**

**EP 0 117 799 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1987

**Description**

La présente invention a pour objet un procédé de dismutation de silanes comportant au moins une liaison Si-H. Elle a trait plus particulièrement à un procédé de dismutation de trichlorosilane permettant d'obtenir le dichlorosilane puis éventuellement le silane.

On sait que le trichlorosilane peut se dismuter en dichlorosilane et en tétrachlorure de silicium selon la réaction équilibrée:

$2HSiCl_3 \rightleftarrows H_2SiCl_2 + SiCl_4$

Le dichlorosilane formé peut à son tour se dismuter selon réaction $2H_2SiCl_2 \rightleftarrows H_3SiCl + HSiCl_3$, $H_3SiCl$ pouvant à son tour se dismuter pour former le silane.

Le dichlorosilane et le silane peuvent être utilisés dans la préparation de silicium de très grande pureté pour les dispositifs à semi-conducteurs ou photovoltaïques.

Divers catalyseurs permettant de réaliser les dismutations ci-dessus ont été décrits dans la littérature. C'est ainsi que le brevet français n° 2 096 605 préconise l'utilisation d'amines tertiaires, les brevets français n° 2 118 725 et 2 261 977 préconisent la mise en oeuvre de résines d'échange d'anions auxquelles sont liés des groupements amine tertiaire ou ammonium quaternaire, le brevet français n° 2 290 447 décrit la mise en oeuvre de pyrrolidones N-substituées et le brevet français n° 2 290 445 celle de tétraalcoylurées.

Quels que soient les catalyseurs qui ont été préconisés jusqu'à présent, ceux-ci nécessitent, pour obtenir une productivité acceptable, de mettre en oeuvre des quantités relativement élevées de catalyseurs ou d'opérer la réaction de dismutation à température élevée.

Le but de la présente invention est de fournir un système catalytique qui permette, d'une façon totalement surprenante, d'opérer la dismutation avec des quantités relativement faibles de catalyseur à une température voisine de la température ambiante. De plus, ce système catalytique permet d'atteindre l'équilibre thermodynamique de la réaction de dismutation très rapidement par rapport aux catalyseurs connus.

La présente invention concerne en effet en procédé de dismutation de silanes comportant au moins une liaison Si-H caractérisé en ce que l'on met en réaction,

d'une part, un silane comportant au moins une liaison Si-H de formule générale $R_nH_mSiX_{4-(n+m)}$ dans laquelle R représente un groupement alkyle ou aryle, X représente un halogène ou un groupement alkoxy, n est un nombre entier égal à 0, 1, 2 ou 3 et m est un nombre entier égal à 1, 2 ou 3

et, d'autre part, un système catalytique comprenant un sel minéral ionique de formule $M^+A^-$ et un composé complexart le cation $M^+$ dudit sel.

Les silanes comportant au moins une liaison Si-H que l'on met en oeuvre selon le procédé de l'invention sont ceux qui ont pour formule $R_nH_mSiX_{4-(n+m)}$ dans laquelle n peut avoir les valeurs 0, 1, 2 ou 3 et m les valeurs 1, 2 ou 3 et R, quand il existe, est choisi parmi les radicaux alcoyle ou aryle et de préférence les radicaux: méthyle, éthyle, propyle, isopropyle et phényle, X est choisi parmi les halogènes et représente de préférence le chlore et les groupements alkoxy et représente de préférence les groupements méthoxy ou éthoxy. Selon un mode de mise en oeuvre préféré de l'invention, on utilise le trichlorosilane, le dichlorosilane, le monochlorosilane, le méthyldichlorosilane, le phényldichlorosilane ou l'éthyldichlorosilane ou leurs mélanges.

Les sels mineraux ioniques de formule $M^+A^-$ mis en oeuvre selon l'invention ne doivent pas réagir avec les silanes présents dans le milieu réactionnel et sont notamment choisis parmi ceux dans lesquels $M^+$ représente un alcalin, un alcalino-terreux ou l'ammonium et de préférence : $Li^+$, $Na^+$, $K^+$, $Ca^{++}$, $NH^+_4$ et ceux dans lesquels $A^-$ représente un halogène, $SCN^-$, $CN^-$, $CO^-_3$ et de préférence : $Cl^-$, $Br^-$, $I^-$.

Selon un premier mode de mise en oeuvre particulier de l'invention, le composé complexant le cation du sel minéral ionique est un agent séquestrant de formule:

$N[-CHR_1-CHR_2-O-(CHR_3-CHR_4-O)_n-R_5]_3$ (I)

dans laquelle n est un nombre entier supérieur ou égal à 0 et inférieur ou égal à 10 ($0<n<10$), $R_1$, $R_2$, $R_3$ et $R_4$ identiques ou différents représentent un atome d'hydrogène ou un radical alkyle ayant de 1 à 4 atomes de carbone et $R_5$ représente un radical alkyle ou cycloalkyle ayant de 1 à 12 atomes de carbone, un radical phényle ou un radical $-C_mH_{2m}-\varnothing$ ou $C_mH_{2m+1}-\varnothing-$, où m est compris entre 1 et 12 ($1 \leqslant m \leqslant 12$).

Selon un deuxième mode de mise en oeuvre particulier de l'invention, le composé complexant est un polyéther macrocyclique ayant de 15 à 30 atomes dans le cycle et constitué de 4 à 10 unités -O-X dans lesquelles X est soit $-CHR_6-CHR_7-$ soit $-CHR_6-CHR_8-CR_9R_7-$, $R_6$, $R_7$, $R_8$ et $R_9$ identiques ou différents étant un atome d'hydrogène ou un radical alkyle ayant de 1 à 4 atomes de carbone, un des X pouvant être $-CHR_6-CHR_8-CR_9R_7-$ quand les unités -O-X comprennent le groupement $-O-CHR_6-CHR_7-$.

Selon un troisième mode de mise en oeuvre particulier de l'invention, le composé complexant est un composé macrocyclique ou bicyclique de formule générale IIa ou IIb

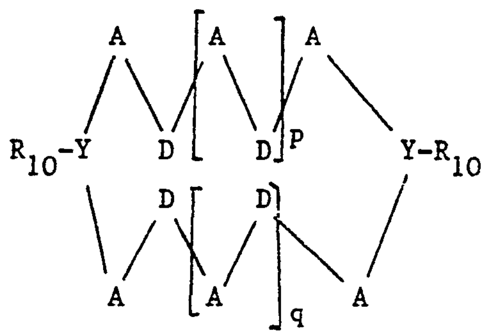

(IIa)

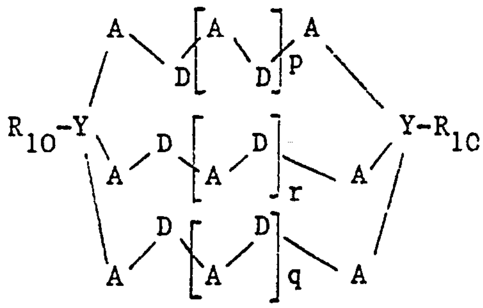

(IIb)

dans lesquelles:

- Y représente N ou P
- A représente un groupement alkylène ayant de 1 à 3 atomes de carbone
- D représente O, S ou N-$R_{11}$ où $R_{11}$ représente un radical alkyle ayant de 1 à 6 atomes de carbone
- $R_{10}$ représente un radical alkyle ayant de 1 à 6 atomes de carbone, p, q et r identiques ou différents sont des nombres entiers compris entre 1 et 5.

Selon un quatrième mode de mise en oeuvre particulier de l'invention, on utilise un mélange d'au moins deux des composés complexant définis ci-dessus.

Selon un cinquième mode de mise en oeuvre particulier de l'invention, on utilise comme composé complexant les agents séquestrants, les polyéthers macrocycliques (encore nommés "Ethers Couronne") et les composés macrocycliques ou bicycliques (encore nommés "Cryptants") greffés sur des supports polymères organiques réticulés. Ces composés complexants greffés sont notamment ceux décrits dans la demande de brevet européen n° 46706 lorsqu'il s'agit des agents séquestrants greffés et dans l'article Angew. Chem. Int. Ed. Engl. 18, 421-429 (1979) lorsqu'il s'agit des Ethers Couronne ou des Cryptants greffés.

Les agents séquestrants greffés décrits dans la demande de brevet européen n° 46706 sont caractérisés en ce qu'ils sont constitués par un support polymère organique réticulé et par une pluralité de groupes fonctionnels, fixés sur ledit support, de formule générale:

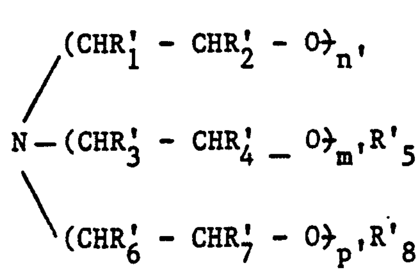

(III)

dans laquelle $R'_1$, $R'_2$, $R'_3$, $R'_4$, $R'_6$ et $R'_7$ identiques ou différents sont chacun un atome d'hydrogène ou un radical alkyle ayant de 1 à 4 atomes de carbone, $R'_5$ et $R'_8$ identiques ou différents représentent un atome d'hydrogène, un radical alkyle ou cycloalkyle ayant de 1 à 12 atomes de carbone, un radical phényle, un radical $-C_{q'}H_{2q'}-\varnothing-$ ou $C_{q'}H_{2q'+1}-\varnothing-$avec q' supérieur ou égal à 1 et inférieur ou égal à environ 12, et dans laquelle n',

m', et p' identiques ou différents sont supérieurs ou égaux à 1 et inférieurs ou égaux à 10.

Bien que cela ne soit pas complètement démontré, il apparaît que l'invention repose sur le fait que le composé complexant le cation M+ du sel minéral ionique permet la dissociation et la solubilisation au moins partielle du sel dans le milieu réactionnel.

Il est permis de penser, bien que cela ne soit pas définitivement établi, que le mécanisme réactionnel de dismutation mis en oeuvre par l'invention est le suivant: l'anion $A^-$ provenant du sel minéral ionique dissocié qui est présent dans le milieu réactionnel se coordonne sur un atome de silicium d'une molécule de silane, ce qui donne naissance à un ion hydrure $H^-$ qui réagit à son tour avec une autre molécule de silane en générant un anion $X^-$ qui, à son tour, se coordonne sur un atome de silicium, ce qui donne naissance à un autre ion hydrure $H^-$, le processus se poursuivant alors de la même façon qui vient d'être décrite avec les autres molécules de silane.

C'est ainsi, par exemple, que, lorsque l'on met en oeuvre le trichlorosilane, on peut schématiser le processus réactionnel de la façon suivante:

complexant + $M^+A^- \rightarrow A^-$ + complexant $M^+$

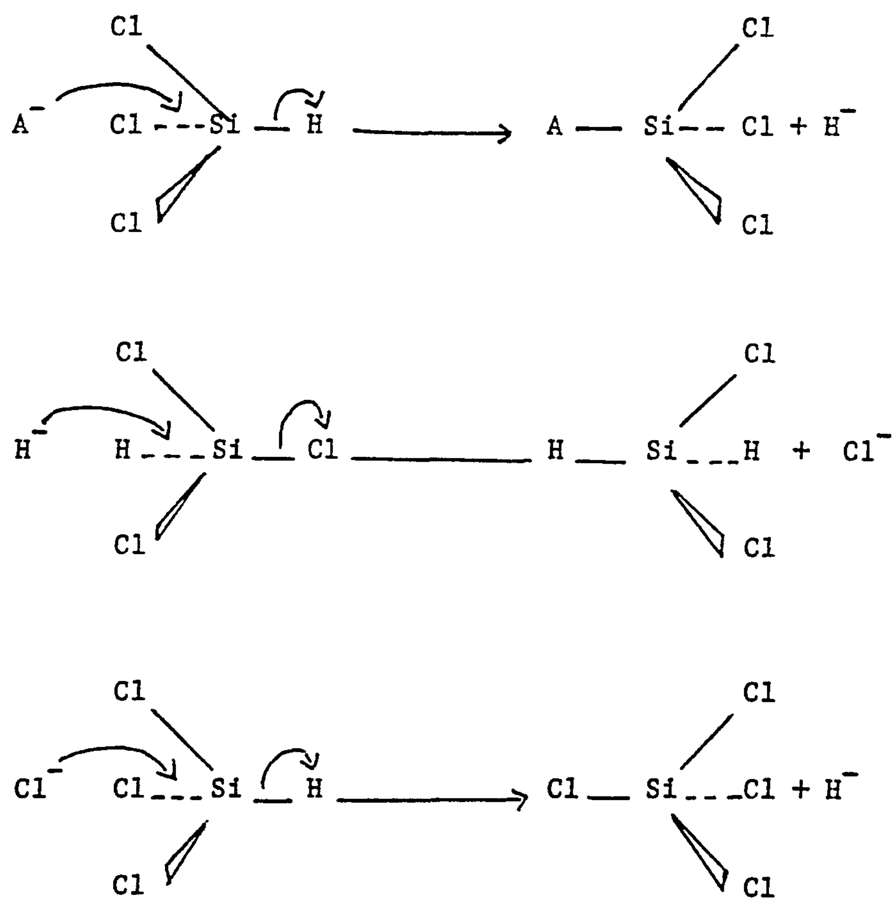

$H^- + HSiCl_3 \rightarrow H_2SiCl_2 + Cl^-$

$Cl^- + HSiCl_3 \rightarrow SiCl_4 + H^-$ etc...

Il est à noter que ce processus réactionnel est complètement spécifique du système catalytique comportant le sel associé au composé complexant. En effet, le sel minéral ionique seul ne peut catalyser la réaction de dismutation.

Selon un mode de réalisation préférentiel de l'invention, on utilise un agent séquestrant de formule (I) dans laquelle $R_1$, $R_2$, $R_3$ et $R_4$ représentent un atome d'hydrogène ou un radical methyle, $R_5$ et n ayant la signification précédente.

Parmi ces derniers, on préfère encore plus particulièrement mettre en oeuvre les agents séquestrants pour lesquels n est supérieur ou égal à 0 et inférieur ou égal à 6 et pour lesquels $R_5$ représente un radical alkyle ayant de 1 à 4 atomes de carbone.

On peut citer:

- la tris(oxa-3 butyl)amine de formule:

$N\text{-}(\text{-}CH_2\text{-}CH_2\text{-}O\text{-}CH_3)_3$

- la tris(dioxa-3,6 heptyl)amine de formule:

$N\text{-}(\text{-}CH_2\text{-}CH_2\text{-}O\text{-}CH_2\text{-}CH_2\text{-}O\text{-}CH_3)_3$

- la tris(trioxa-3,6,9 décyl)amine de formule:
$N\text{-}(\text{-}CH_2\text{-}CH_2\text{-}O\text{-}CH_2\text{-}CH_2\text{-}O\text{-}CH_2\text{-}CH_2\text{-}O\text{-}CH_3)_3$
- la tris(dioxa-3,6 octyl)amine de formule:
$N\text{-}(\text{-}CH_2\text{-}CH_2\text{-}O\text{-}CH_2\text{-}CH_2\text{-}O\text{-}C_2H_5)_3$
- la tris(trioxa-3,6,9 undécyl)amine de formule:
$N\text{-}(\text{-}CH_2\text{-}CH_2\text{-}O\text{-}CH_2\text{-}CH_2\text{-}O\text{-}CH_2\text{-}CH_2\text{-}O\text{-}C_2H_5)_3$
- la tris(dioxa-3,6 nonyl)amine de formule:
$N\text{-}(\text{-}CH_2\text{-}CH_2\text{-}O\text{-}CH_2\text{-}CH_2\text{-}O\text{-}C_3H_7)_3$
- la tris(trioxa-3,6,9 dodécyl)amine de formule:
$N\text{-}(\text{-}CH_2\text{-}CH_2\text{-}O\text{-}CH_2\text{-}CH_2\text{-}O\text{-}CH_2\text{-}CH_2\text{-}O\text{-}C_3H_7)_3$
- la tris(dioxa-3,6 décyl)amine de formule:
$N\text{-}(\text{-}CH_2\text{-}CH_2\text{-}O\text{-}CH_2\text{-}CH_2\text{-}O\text{-}C_4H_9)_3$
- la tris(trioxa-3,6,9 tridécyl)amine de formule:
$N\text{-}(\text{-}CH_2\text{-}CH_2\text{-}O\text{-}CH_2\text{-}CH_2\text{-}O\text{-}CH_2\text{-}CH_2\text{-}O\text{-}C_4H_9)_3$
- la tris(tetra-oxa-3,6,9,12 tridécyl)amine de formule:
$N[\text{-}CH_2\text{-}CH_2\text{-}O\text{-}(\text{-}CH_2\text{-}CH_2\text{-}O)_3\text{-}CH_3]_3$
- la tris(hexa-oxa-3,6,9,12,15,18 nonadecyl)amine de formule:
$N[\text{-}CH_2\text{-}CH_2\text{-}O\text{-}(CH_2\text{-}CH_2\text{-}O\text{-})\text{-}_5\ CH_3]_3$
- la tris(dioxa-3,6 méthyl-4 heptyl)amine de formule:
$N[\text{-}CH_2\text{-}CH_2\text{-}OCH\text{-}(CH_3\text{-}CH_2\text{-}O\text{-}CH_3]_3$
- la tris(dioxa-3,6 diméthyl-2,4 heptyl) amine de formule:
$N[\text{-}CH_2CH\text{-}(CH_3)\text{-}OCH(CH3)\text{-}CH_2\text{-}O\text{-}CH_3]_3$

Les amines utilisées sont connues en tant que telles dans l'art antérieur. C'est ainsi que le brevet français 1.302.365 cite l'obtention des amines tertiaires $N\text{-}(\text{-}CH_2\text{-}CH_2\text{-}O\text{-}CH_3)_3$ et $N\text{-}(\text{-}CH_2\text{-}CH_2\text{-}O\text{-}CH_2\text{-}CH_2\text{-}O\text{-}CH_3)_3$ comme sous produits de la synthèse des amines primaires et secondaires correspondantes, ces amines primaires et secondaires étant des produits intéressants comme intermédiaires en vue de la synthèse de substances pharmaceutiques, comme inhibiteurs de corrosion, comme intermédiaires en vue de la synthèse de produits chimiques intéressants en agriculture et comme émulsifiants. Il n est pas inutile de souligner que le domaine d'application des composés obtenus dans le brevet 1.302.365 précité simultanément aux amines utilisées dans le procédé objet de la présente demande est totalement étranger au domaine de l'invention.

Les polyéthers macrocycliques qui peuvent être mis en oeuvre dans le procédé selon 1 invention sont connus sous l'appellation générale d'"éthers couronnes" et sont décrits dans le brevet français 69.43579 publié sous le numéro 2.026.451.

On peut citer comme exemples d'éthers couronnes pouvant être utilisés selon l'invention:

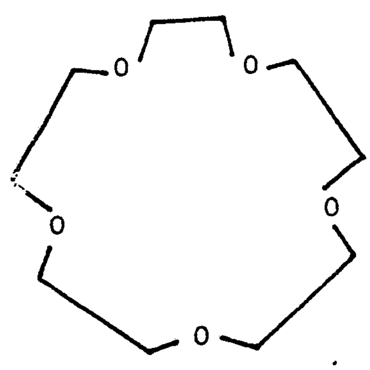

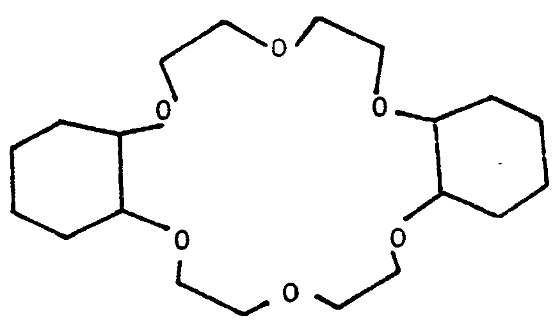

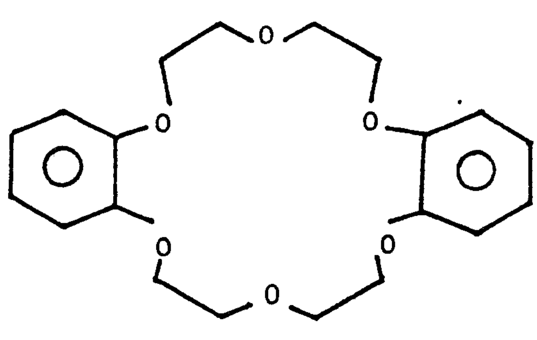

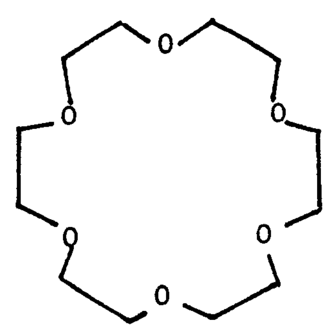

Les composés macrocycliques et bicycliques sont décrits dans le brevet français 70.21079 publié sous le numéro 2.052.947. On peut citer comme exemples de tels composés concernant la mise en oeuvre du procédé selon l'invention:

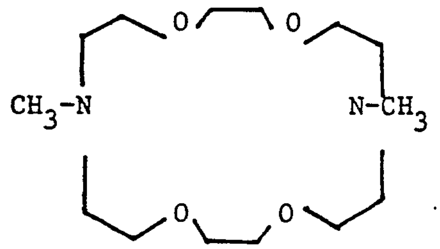

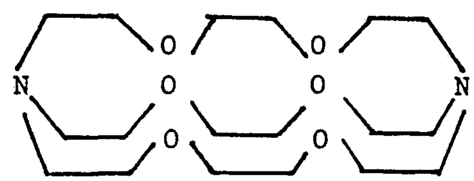

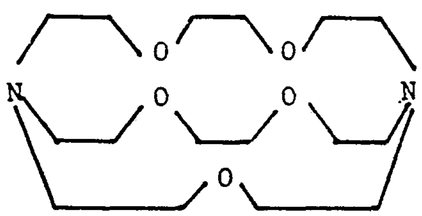

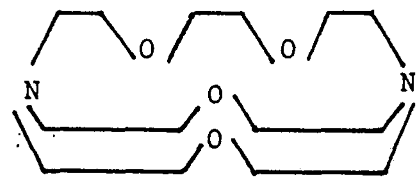

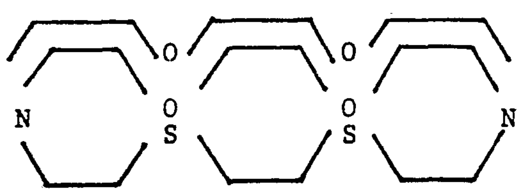

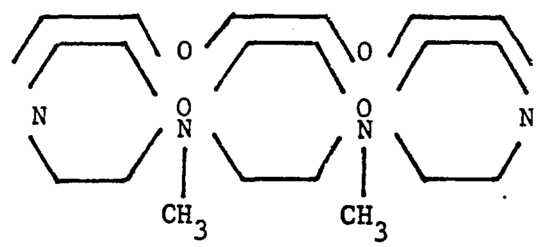

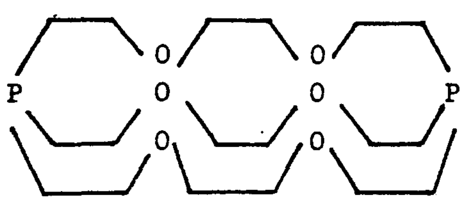

Selon un autre mode de réalisation préférentiel de l'invention, on utilise un agent séquestrant supporté constitué par un support polymère organique réticulé et par une pluralité de groupes fonctionnels fixés sur ledit support, de formule générale (III) dans laquelle $R'_1$, $R'_2$, $R'_3$, $R'_4$, $R'_6$, et $R_7$ identiques ou différents, représentent un atome d'hydrogène ou le radical méthyle et $R'_5$ et $R'_8$ identiques ou différents représentent un atome d'hydrogène ou un radical alkyle ayant de 1 à 4 atomes de carbone. Selon un autre mode de réalisation préférentiel de l'invention, n', m' et p' identiques ou différents sont supérieurs ou égaux à 1 et inférieurs ou égaux à 6.

On peut citer comme exemples de groupes fonctionnels, les groupes de formules suivantes:

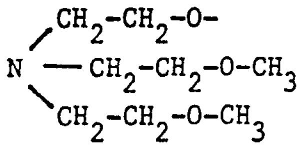

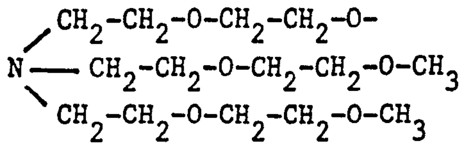

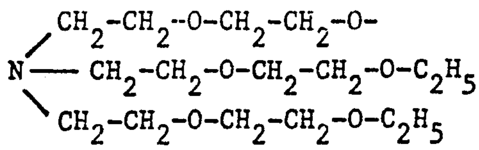

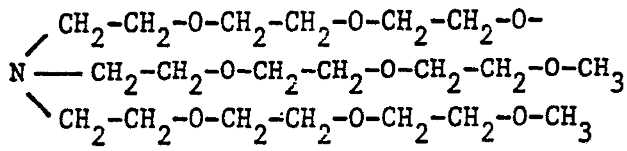

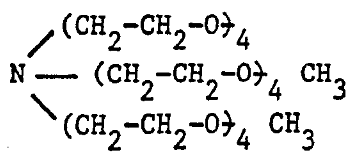

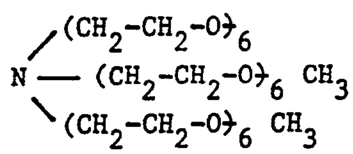

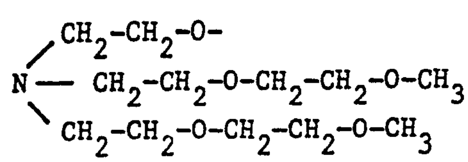

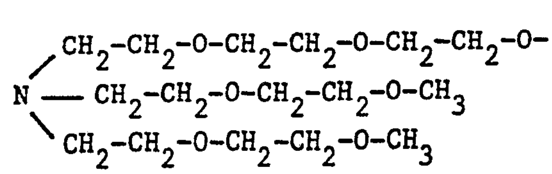

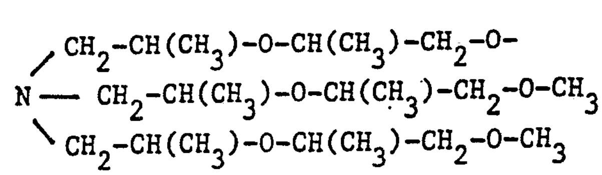

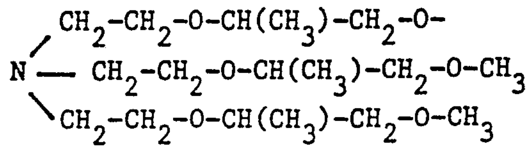

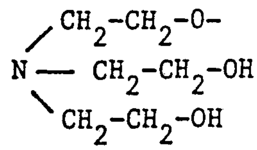

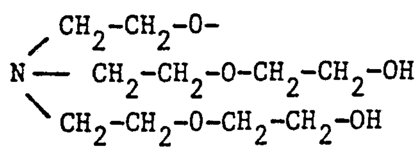

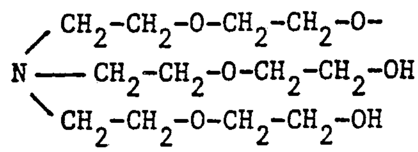

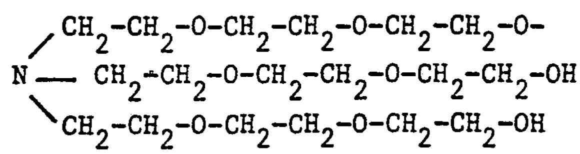

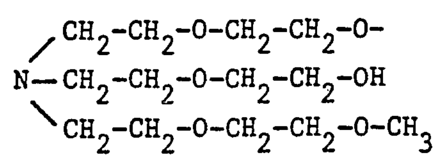

Le support peut dériver de tout polymère organique réticulé comportant des groupements substituables par les groupements fonctionnels de formule (III).

On peut citer comme exemples de polymères organiques adaptés à la présente invention, les polymères dérivés de composés vinylaromatiques tels que le styrène, le methylstyrène et les copolymères de composés vinylaromatiques et de diènes conjugués en $C_4$-$C_6$ tels que les copolymères du styrène et du butadiène et du styrène et de l'isoprène.

On préfère tout particulièrement utiliser comme polymère organique le polystyrène, l'agent de réticulation étant alors, suivant un mode de réalisation préférentiel, le divinylbenzène. Le taux de réticulation est un facteur important. Il est en effet nécessaire que les groupes fonctionnels de formule (III) greffés sur le polystyrène soient actifs. Pour cela, il faut que les molécules du solvant dans lequel l'agent séquestrant supporté sera mis en oeuvre, dans les applications précisées plus loin, pénètrent à l'intérieur du polymère. Dans ce but, il est nécessaire que le taux de réticulation ne soit pas trop important pour ne pas empêcher la pénétration du solvant et des réactifs. On préfère utiliser un polystyrène dont le taux de réticulation par le divinylbenzàne est inférieur à environ 10%. Encore plus préférentiellement, le taux de réticulation est inférieur à 5% environ.

Le groupement substituable est de préférence le chlore ou le brome du radical chloro ou bromo methyl $-CH_2Cl$ ou $-CH_2Br$ fixé sur le noyau benzénique du polystyrène.

On préfère tout particulièrement que le pourcentage de noyaux benzéniques du polystyrène portant un groupement fonctionnel soit supérieur à 5. Encore plus préférentiellement, ce pourcentage est supérieur à 10%.

On peut représenter les agents séquestrants supportés préférés par la formule suivante:

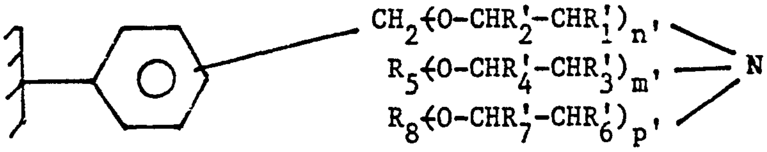

où 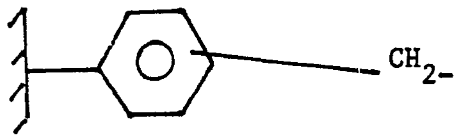

dérive du polystyrène chloro ou bromo méthylé réticulé par le divinylbenzène de formule:

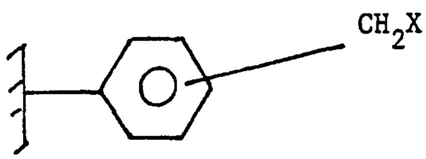

ou X représente Cl ou Br.

Selon un autre mode de réalisation préférentiel de l'invention, on utilise un polyéther macrocyclique ou un composé macrocyclique ou bicyclique greffé sur un polymère organique réticulé qui est constitué d'un polystyrène obtenu par réaction du dérivé aminé approprié, du polyéther macrocyclique ou du composé macrocyclique ou bicyclique avec un polystyrène chlorométhylé. On peut représenter ces produits supportés préférés par les formules suivantes:

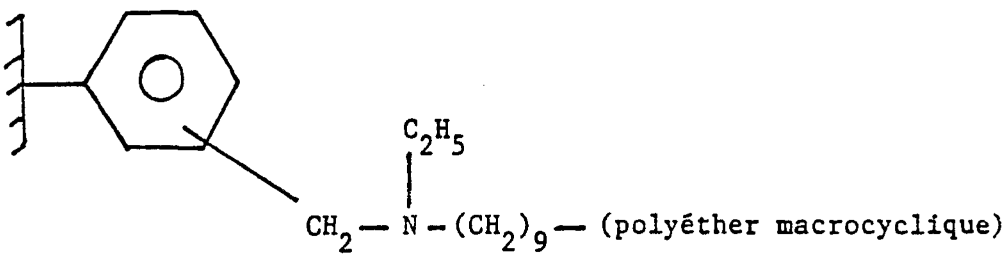

et

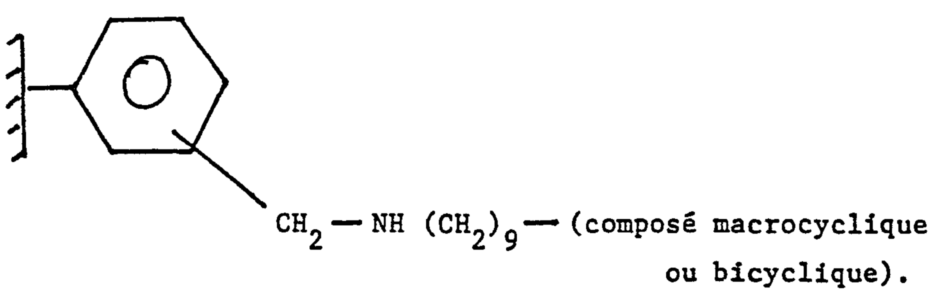

Le procédé selon l'invention peut être mis en oeuvre en présence ou en l'absence de solvant. Dans ce dernier cas, c'est le silane de départ qui joue le rôle de solvant. Quand on utilise un tiers solvant, ce dernier doit répondre à un certain nombre de conditions: il faut qu'il solubilise le silane de départ; il faut aussi qu'il soit inerte chimiquement vis à vis des silanes introduits ou formés.

On choisit, de préférence, un solvant comme par exemple, le chlorobenzène, l'orthodichlorobenzène, le benzène, le toluène, le cyclohexane, l'heptane, le dichloroéthane, le chlorure de méthylène, le dichlorobenzène, le tétrahydrofurane, le dioxane, le diméthoxyéthane.

Le choix du composé complexant le plus adapté à la mise en oeuvre du procédé selon l'invention se fait, en outre, en tenant compte de la taille du cation du sel minéral ionique. Plus la taille du cation sera importante, plus le nombre d'atomes d'oxygène contenus dans la molécule du composé complexant devra être élevé.

Le procédé selon l'invention est mis en oeuvre de préférence à une température voisine de la température ambiante, c'est-à-dire entre 0 et 50°C, ceci constitue un des avantages fondamental du procédé selon l'invention. Toutefois, on peut opérer, si on le désire, à d'autres températures et notamment celles comprises entre -30°C et la température d'ébullition du milieu réactionnel.

On opère de préférence à la pression atmosphérique. Bien entendu, des pressions supérieures ou inférieures à la pression atmosphérique ne sont pas exclues.

On utilise le composé complexant en quantité telle que le rapport molaire du composé complexant au sel minéral ionique est, de préférence, compris entre 0,05 et 20. Encore plus préférentiellement, ce rapport est compris entre 0,12 et 2.

Le rapport molaire du sel minéral ionique au silane de départ est compris de préférence entre 1 et 0,0001. Encore plus préférentiellement, il est compris entre 0,5 et 0,005.

Les silanes obtenus par la réaction de dismutation peuvent être soit séparés au fur et à mesure de leur formation s'ils sont peu solubles dans le milieu réactionnel et suffisamment volatils, soit séparés en fin de réaction selon les techniques bien connues de l'homme de l'art comme, par exemple, par distillation, solubilisation sélective, etc...

Le procédé selon l'invention permet d'opérer la dismutation des silanes selon les mises en oeuvre classiques.

Les composés complexants greffés mis en oeuvre selon l'invention permettent de travailler de préférence en continu sur colonne, alors que les composés complexants non greffés permettent de travailler de préférence en discontinu.

Les agents séquestrants de formule (I) utilisés dans le procédé selon l'invention peuvent être préparés comme décrit dans la demande de brevet français publiée sous le n° 2 450 120.

La présente invention permet ainsi d'opérer la dismutation de silanes comportant au moins une liaison Si-H à température ambiante et avec une productivité exceptionnelle et mettant en oeuvre de faibles quantités de catalyseur.

D'autres caractéristiques et avantages de l'invention apparaîtront plus clairement à la lecture des exemples qui vont suivre.

**Exemple N° 1**

Dans un flacon de 8ml muni d'un septum en Viton®, on introduit:

- $44,9\ 10^{-3}$ moles soit 5,050g de chlorobenzène comme solvant.
- $0,255\ 10^{-3}$ moles soit 10,8mg de LiCl comme sel minéral ionique,
- $0,26\ 10^{-3}$ moles soit 85,7mg de tris(dioxa 3,6 heptyl) amine comme composé susceptible de dissocier au moins partiellement LiCl, ce composé complexant sera dans les exemples suivants symbolisé par: TDA 1,

Après avoir porté le flacon à la température de 30°C, on introduit, à l'aide d'une seringue, 3,346g de $HSiCl_3$, soit $24,7\ 10^{-3}$ moles.

La réaction de dismutation de $HSiCl_3$ est suivie par analyses périodiques du milieu réactionnel en chromatographie phase gazeuse.

Après 1 heure de réaction, la composition est la suivante (pourcentages massiques):

| | |
|---|---|
| Chlorobenzène | 60,6% |
| $HSiCl_3$ | 38,7% |
| $SiCl_4$ | 0,88% |
| $H_2SiCl_2$ | 0,52% |

ce qui correspond à un taux de transformation de $HSiCl_3$ de 3,5%,

Un essai témoin, effectué dans les mêmes conditions mais sans TDA 1 ne permet pas de détecter une formation de $SiCl_4$ et de $H_2SiCl_2$, même après plusieurs dizaines d'heures.

**Exemple n° 2**

Dans des conditions opératoires identiques à celles de l'exemple n° 1, on effectue le même essai mais en augmentant le rapport molaire $\frac{TDA\ 1 + LiCl}{HSiCl_3}$.

| | |
|---|---|
| Chlorobenzène | : 5,170g (45,9 $10^{-3}$ moles) |
| TDA 1 | : 252 mg (0,78 $10^{-3}$ moles) |
| LiCl | : 31,8 mg (0,75 $10^{-3}$ moles) |
| $HSiCl_3$ | : 3,370g (24,9 $10^{-3}$ moles) |

Après 1 heure de réaction, la composition est la suivante:

| | |
|---|---|
| Chlorobenzène | : 55,35% |
| $HSiCl_3$ | : 33,7% |
| $SiCl_4$ | : 2,75% |
| $H_2SiCl_2$ | : 1,63% |

ce qui correspond à un taux de transformation de $HSiCl_3$ de 11,5%.

L'équilibre thermodynamique (taux de transformation de $HSiCl_3$ de 18% environ) est atteint en 2h30.

**Exemple n° 3**

Dans des conditions opératoires identiques à celles des exemples précédents, on effectue le même essai, en augmentant encore le rapport molaire $\frac{TDA\ 1 + LiCl}{HSiCl3}$:

| | |
|---|---|
| Chlorobenzène | : 5,170g (45,9 $10^{-3}$ moles) |
| TDA 1 | : 420 mg (1,30 $10^{-3}$ moles) |
| LiCl | : 53 mg (1,25 $10^{-3}$ moles) |
| $HSiCl_3$ | : 3,370g (24,9 $10^{-3}$ moles) |

Après 1 heure de réaction, la composition est la suivante:

| | |
|---|---|
| Chlorobenzène | : 50,6% |
| $HSiCl_3$ | : 31,6% |
| $SiCl_4$ | : 4,06% |
| $H_2SiCl_2$ | : 2,41% |

ce qui correspond à un taux de transformation de $HSiCl_3$ de 17%.

L'équilibre thermodynamique est atteint en 1h20mn environ.

**Exemple n° 4**

Dans des conditions opératoires identiques à celles de l'exemple n° 1, on effectue un essai de dismutation de $HSiCl_3$ en présence du système TDA 1 + LiCl mais sans solvant:

| | |
|---|---|
| TDA 1 | : 84 mg (0,26 $10^{-3}$ moles) |
| LiCl | : 11 mg (0,26 $10^{-3}$ moles) |
| $HSiCl_3$ | : 3,26 g (24,1 $10^{-3}$ moles) |

Après 1 heure de réaction, la composition est la suivante:

| | |
|---|---|
| $HSiCl_3$ | : 86,5% |
| $SiCl_4$ | : 6,70% |
| $H_2SiCl_2$ | : 3,99% |

ce qui correspond à un taux de transformation de $HSiCl_3$ de 11%.

**Exemple n° 5**

Dans des conditions opératoires identiques à celles de l'exemple n° 1, on effectue un essai de dismutation de $HSiCl_3$ en présence du système TDA 1 + KCl.

| | |
|---|---|
| Chlorobenzène | : 5,147g (45,7 $10^{-3}$ moles) |
| TDA 1 | : 81 mg (0,25 $10^{-3}$ moles) |
| KCl | : 18,5 mg (0,25 $10^{-3}$ moles) |
| $HSiCl_3$ | : 2,998g (22,1 $10^{-3}$ moles) |

Après 1 heure de réaction, la composition est la suivante:

| | |
|---|---|
| Chlorobenzène | : 63,36% |
| $HSiCl_3$ | : 32,85% |
| $SiCl_4$ | : 2,52% |
| $H_2SiCl_2$ | : 1,50% |

ce qui correspond à un taux de transformation de $HSiCl_3$ de 10,9 %.

**Exemple n° 6**

On reproduit, dans cet exemple, l'essai décrit dans l'exemple 5, mais à une température de 50°C au lieu de 30°C.

| | |
|---|---|
| Chlorobenzène | : 5,948g (52,5 $10^{-3}$ moles) |
| TDA 1 | : 80 mg (0,25 $10^{-3}$ moles) |
| KCl | : 18,5 mg (0,25 $10^{-3}$ moles) |
| $HSiCl_3$ | : 2,548g (21,5 $10^{-3}$ moles) |

Après 1 heure de réaction, la composition est la suivante:

| | |
|---|---|
| Chlorobenzène | : 63,2% |
| $HSiCl_3$ | : 28,7% |
| $SiCl_4$ | : 1,67% |
| $H_2SiCl_2$ | : 0,99% |

ce qui correspond à un taux de transformation de $HSiCl_3$ de 8,5%.

L'équilibre thermodynamique est atteint en 4 heures.

**Exemple n° 7**

Dans des conditions opératoires identiques à celles de l'exemple n° 1, on effectue un essai de dismutation de $HSiCl_3$ en milieu chlorobenzène, avec LiCl, mais en remplaçant la tris(dioxa-3,6 heptyl) amine (TDA I) par la même amine, greffée sur résine polystyrène.

| | |
|---|---|
| Chlorobenzène | : 5,538g (49,2 $10^{-3}$ moles) |
| TDA 1 greffée sur polystyrène | : 163 mg (0,25 $10^{-3}$ moles) |
| KCl | : 18,5 mg (0,25 $10^{-3}$ moles) |
| $HSiCl_3$ | : 2,915g (21,5 $10^{-3}$ moles) |

Après 1 heure de réaction, la composition est la suivante:

| | |
|---|---|
| Chlorobenzène | : 64,2% |
| $HSiCl_3$ | : 31,5% |
| $SiCl_4$ | : 1,37% |
| $H_2SiCl_2$ | : 0,82% |

ce qui correspond à un taux de transformation de $HSiCl_3$ de 6,5%.

**Exemple n° 8**

Dans des conditions opératoires identiques à celles de l'exemple n° 1, on effectue un essai de dismutation de $HSiCl_3$ en présence du système TDA 1 + KI, toujours à 30°C en milieu chlorobenzène.

| | |
|---|---|
| Chlorobenzène | : 5,240g (46,6 $10^{-3}$ moles) |
| TDA 1 | : 89 mg (0,28 $10^{-3}$ moles) |
| KI | : 45,7 mg (0,28 $10^{-3}$ moles) |
| $HSiCl_3$ | : 3,183g (23,5 $10^{-3}$ moles) |

Le système catalytique est partiellement soluble (le taux de solubilisation du sel est de 43%).

Après 2 heures de réaction, la composition est la suivante:

| | |
|---|---|
| Chlorobenzène | : 62,2% |
| $HSiCl_3$ | : 35,5% |
| $SiCl_4$ | : 1,40% |
| $H_2SiCl_2$ | : 0,83% |

ce qui correspond à un taux de transformation de $HSiCl_3$ de 5,9%.

**Exemple n° 9**

Dans des conditions opératoires identiques à celles de l'exemple n° 1, on effectue un essai de dismutation de $HSiCl_3$ en présence du système TDA 1 + NaI.

| | |
|---|---|
| Chlorobenzène | : 5,293g (47 $10^{-3}$ moles) |
| TDA 1 | : 80,8 mg (0,25 $10^{-3}$ moles) |
| NaI | : 37,5 mg (0,25 $10^{-3}$ moles) |
| $HSiCl_3$ | : 3,358g (24,1 $10^{-3}$ moles) |

Le système catalytique est totalement soluble.

Après 1/2 heure de réaction, la composition est la suivante:

| | |
|---|---|
| Chlorobenzène | : 61,9% |
| $HSiCl_3$ | : 32,4% |
| $SiCl_4$ | : 3,59% |
| $H_2SiCl_2$ | : 2,13% |

ce qui correspond à un taux de transformation de $HSiCl_3$ de 15%.

L'équilibre thermodynamique (taux de transformation de $HSiCl_3$ égal à 18% environ) est atteint en 1h10mn.

**Exemple n° 10**

On reproduit, dans cet exemple, l'essai décrit dans l'exemple n° 9 mais en éliminant le solvant.

| | |
|---|---|
| TDA 1 | : 84 mg (0,26 $10^{-3}$ moles) |
| NaI | : 37,5 mg (0,25 $10^{-3}$ moles) |
| $HSiCl_3$ | : 3,437g (25,4 $10^{-3}$ moles) |

Le système catalytique est, dans ce cas, partiellement soluble.
Après 1 heure de réaction, la composition est la suivante:

| | |
|---|---|
| $HSiCl_3$ | : 89,7% |
| $SiCl_4$ | : 4,25% |
| $H_2SiCl_2$ | : 2,52% |

ce qui correspond à un taux de transformation de $HSiCl_3$ de 7,1%.

**Exemple n° 11**

Dans des conditions opératoires identiques à celles de l'exemple n° 1, on effectue un essai de dismutation de $HSiCl_3$ en présence de TDA 1 + Na Br.

| | |
|---|---|
| Chlorobenzène | : 5,30g (47,1 $10^{-3}$ moles) |
| TDA 1 | : 84 mg (0,25 $10^{-3}$ moles) |
| NaBr | : 25,7mg (0,25 $10^{-3}$ moles) |

On filtre la solution obtenue avant introduction de $HSiCl_3$.

| | |
|---|---|
| $HSiCl_3$ | : 3,221g (23,8 $10^{-3}$ moles) |

Après 1 heure de réaction, la composition est la suivante:

| | |
|---|---|
| Chlorobenzène | : 62,2% |
| $HSiCl_3$ | : 33,5% |
| $SiCl_4$ | : 2,49% |
| $H_2SiCl_2$ | : 1,48% |

ce qui correspond à un taux de transformation de $HSiCl_3$ de 10,5%.
L'équilibre thermodynamique est atteint en 3 heures environ.

**Exemple n° 12**

Dans des conditions opératoires identiques à celles de l'exemple 1, on effectue un essai de dismutation de $HSiCl_3$ en présence de TDA 1 + CsCl.

| | |
|---|---|
| Chlorobenzène | : 5,078g (45,1 $10^{-3}$ moles) |
| TDA 1 | : 86 mg (0,266 $10^{-3}$ moles) |
| CsCl | : 43 mg (0,256 $10^{-3}$ moles) |
| $HSiCl_3$ | : 3,185g (23,5 $10^{-3}$ moles) |

Après 2 heures de réaction, la composition est la suivante:
>R

| | |
|---|---|
| Chlorobenzène | : 61,5% |
| $HSiCl_3$ | : 35,6% |
| $SiCl_4$ | : 1,57% |
| $H_2SiCl_2$ | : 0,93% |

ce qui correspond à un taux de transformation de $HSiCl_3$ de 7,5%.

**Exemple n° 13**

Dans des conditions opératoires identiques à celles de l'exemple n° 1, on effectue un essai de dismutation de $HSiCl_3$ en présence de TDA 1 + $CaCl_2$.

| | |
|---|---|
| Chlorobenzène | : 5,169g (45,9 $10^{-3}$ moles) |
| TDA 1 | : 80,8 mg (0,25 $10^{-3}$ moles) |
| $CaCl_2$ | : 27,7 mg (0,25 $10^{-3}$ moles) |

On filtre la solution obtenue avant introduction de $HSiCl_3$.

| | |
|---|---|
| $HSiCl_3$ | : 3,404g (25,1 $10^{-3}$ moles) |

Après 2 heures de réaction, la composition est la suivante:

| | |
|---|---|
| Chlorobenzène | : 60,8% |
| $HSiCl_3$ | : 37,9% |
| $SiCl_4$ | : 1,30% |
| $H_2SiCl_2$ | : 0,78% |

ce qui correspond à un taux de transformation de $HSiCl_3$ de 5,2%.

**Exemple n° 14**

Dans des conditions opératoires identiques à celles de l'exemple n° 1, on effectue un essai de dismutation de $HSiCl_3$ en présence de TDA 1 + $Na_2CO_3$.

| | |
|---|---|
| Chlorobenzène | : 5,226g (46,4 $10^{-3}$ moles) |
| TDA 1 | : 84 mg (0,26 $10^{-3}$ moles) |
| $N_2CO_3$ | : 27 mg (0,255 $10^{-3}$ moles) |
| $HSiCl_3$ | : 3,116g (23 $10^{-3}$ moles) |

Après 3 heures de réaction, la composition est la suivante:

| | |
|---|---|
| Chlorobenzène | : 61,8% |
| $HSiCl_3$ | : 36,2% |
| $SiCl_4$ | : 0,42% |
| $H_2SiCl_2$ | : 0,25% |

ce qui correspond à un taux de transformation de $HSiCl_3$ de 1,8%.

**Exemple n° 15**

On reproduit dans cet exemple, l'essai décrit dans l'exemple n° 9, mais en remplaçant le solvant chlorobenzène par du cyclohexane.

| | |
|---|---|
| Cyclohexane | : 3,830g (45,5 $10^{-3}$ moles) |
| TDA 1 | : 84 mg (0,26 $10^{-3}$ moles) |
| NaI | : 37,5 mg (0,25 $10^{-3}$ moles) |
| $HSiCl_3$ | : 3,316g (24,5 $10^{-3}$ moles) |

Après 2 heures de réaction, la composition est la suivante:

| | |
|---|---|
| Cyclohexane | : 53,3% |
| $HSiCl_3$ | : 43,9% |
| $SiCl_4$ | : 1,45% |
| $H_2SiCl_2$ | : 0,86% |

ce qui correspond à un taux de transformation de $HSiCl_3$ de 5%.

**Exemple n° 16**

On reproduit, dans cet exemple, l'essai décrit dans l'exemple n° 9, mais en utilisant, cette fois, le benzonitrile comme solvant

| | |
|---|---|
| benzonitrile | : 4,666g (45,2 $10^{-3}$ moles) |
| TDA 1 | : 84 mg (0,26 $10^{-3}$ moles) |
| NaI | : 37,5 mg (0,25 $10^{-3}$ moles) |
| $HSiCl_3$ | : 3,20g (23,6 $10^{-3}$ moles) |

Après 2 heures de réaction, la composition est la suivante:

| | |
|---|---|
| Benzonitrile | : 58,9% |
| $HSiCl_3$ | : 38,7% |
| $SiCl_4$ | : 1,0% |
| $H_2SiCl_2$ | : 0,62% |

ce qui correspond à un taux de transformation de $HSiCl_3$ de 4,1%.

**Exemple n° 17**

On reproduit, dans cet exemple, l'essai décrit dans l'exemple n° 5, mais en remplaçant le chlorobenzène par un mélange chlorobenzène-éther diméthylique du glycol.

| | |
|---|---|
| Chlorobenzène | : 1,160g (10,3 $10^{-3}$ moles) |
| $(CH_3OCH_2)_2$ | : 3,190g (35,4 $10^{-3}$ moles) |
| TDA 1 | : 80 mg (0,25 $10^{-3}$ moles) |
| KCl | : 18,5 mg (0,25 $10^{-3}$ moles) |
| $HSiCl_3$ | : 2,838g (20,9 $10^{-3}$ moles) |

Après 2 heures de réaction, la composition est la suivante:

| | |
|---|---|
| Chlorobenzène | : 15,9% |
| $(CH_3OCH_2)_2$ | : 43,8% |
| $HSiCl_3$ | : 35,5% |
| $SiCl_4$ | : 2,09% |
| $H_2SiCl_2$ | : 1,24% |

ce qui correspond à un taux de transformation de $HSiCl_3$ de 8,6 %.

L'équilibre thermodynamique est atteint en 6 heures environ.

**Exemple n° 18**

Dans des conditiona opératoires identiques à celles de l'exemple n° 1, on effectue un essai de dismutation à 30°C de $HSiCl_3$ en présence de KCl et de 2,5,8,15,18,21-Hexaoxatricyclo ($20.4.0.0^{9-14}$)-hexacosane, ce composé est commercialisé sous l'appellation : dicyclohexyl 18 couronne 6.

| | |
|---|---|
| Chlorobenzène | : 2,971g (26,4 $10^{-3}$ moles) |
| Dicyclohexyle 18 couronne 6 | : 52,1mg (0,14 $10^{-3}$ moles) |
| KCl | : 10,4 mg (0,14 $10^{-3}$ moles) |
| $HSiCl_3$ | : 1,988g (14,7 $10^{-3}$ moles) |

Après 24 heures de réaction, la composition est la suivante:

| | |
|---|---|
| Chlorobenzène | : 60,4% |
| $HSiCl_3$ | : 33,3% |
| $SiCl_4$ | : 4,49% |
| $H_2SiCl_2$ | : 2,67% |

ce qui correspond à un taux de transformation de $HSiCl_3$ de 17,7% (équilibre thermodynamique).

**Exemple n° 19**

Dans des conditions opératoires identiques à celles de l'exemple n° 1, on effectue un essai de dismutation de $HSiCl_3$ en présence de KCl et d'hexaoxa 4, 7, 13, 16, 21, 24 diaza 1,10 bicyclo 8, 8, 8 hexacosane (ce composé est commercialisé sous l'appellation Kryptofix 2,2,2 [R]).

| | |
|---|---|
| Chlorobenzène | : 3,358g (29,8 $10^{-3}$ moles) |
| Kryptofix 2,2,2 | : 62,8mg (0,167 $10^{-3}$ moles) |
| KCl | : 12,4 mg (0,167 $10^{-3}$ moles) |
| $HSiCl_3$ | : 2,315g (17,1 $10^{-3}$ moles) |

Après 1/2 heure de réaction, la composition est la suivante:

| | |
|---|---|
| Chlorobenzène | : 59,7% |
| $HSiCl_3$ | : 34,0% |
| $SiCl_4$ | : 4,52% |
| $H_2SiCl_2$ | : 2,69% |

ce qui correspond à un taux de transformation de $HSiCl_3$ de 17,5% (pratiquement l'équilibre thermodynamique).

**Exemple n° 20**

On reproduit, dans cet exemple, l'essai décrit dans l'exemple n° 19, mais en remplaçant le sel KCl par KI

| | |
|---|---|
| Chlorobenzène | : 5,049g (44,9 $10^{-3}$ moles) |
| Kryptofix 2,2,2 | : 94,1mg (0,25 $10^{-3}$ moles) |
| KI | : 41,5 mg (0,25 $10^{-3}$ moles) |
| $HSiCl_3$ | : 3,293g (243 $10^{-3}$ moles) |

Après 1/2 heure de réaction, la composition est la suivante:

| | |
|---|---|
| Chlorobenzène | : 61,2% |
| $HSiCl_3$ | : 32,8% |
| $SiCl_4$ | : 4,45% |
| $H_2SiCl_2$ | : 2,65% |

ce qui correspond à un taux de transformation de $HSiCl_3$ de 17,8% (pratiquement l'équilibre thermodynamique).

**Exemple n° 21**

On effectue un essai de dismutation de $CH_3SiHCl_2$, dans les mêmes conditions opératoires que pour l'exemple 1, en présence de TDA 1 + LiCl, en milieu chlorobenzène, à 30° C.

| | |
|---|---|
| Chlorobenzène | : 2,225g (19,5 $10^{-3}$ moles) |
| TDA 1 | : 0,352mg (1,09 $10^{-3}$ moles) |
| LiCl | : 21,8 mg (0,51 $10^{-3}$ moles) |
| $CH_3SiHCl_2$ | : 0,775g (6,74 $10^{-3}$ moles) |

Après 19 heures de réaction, la composition est la suivante :

| | |
|---|---|
| Chlorobenzène | : 65,4% |
| $CH_3SiHCl_2$ | : 21,6% |
| $CH_3SiCl_3$ | : 0,74% |
| $CH_3SiH_2Cl$ | : 0,40% |

ce qui correspond à un taux de transformation de $CH_3SiHCl_2$ de 5%.

**Revendications**

1) Procédé de dismutation de silanes comportant au moins une liaison Si-H caractérisé en ce que l'on met en réaction,

d'une part, un silane comportant au moins une liaison Si-H de formule générale $R_nH_mSiX_{4-(n+m)}$ dans laquelle R représente un groupement alkyle ou aryle, X représente un halogène ou un groupement alkoxy, n est un nombre entier égal à 0, 1, 2 ou 3 et m est un nombre entier égal à 1, 2 ou 3

et, d'autre part, un système catalytique comprenant un sel mineral ionique de formule $M^+A^-$ et un composé complexant le cation $M^+$ dudit sel.

2) Procédé selon la revendication 1 caractérisé en ce que le sel minéral ionique $M^+A^-$ est choisi parmi ceux dans lesquels $M^+$ représente un alcalin, un alcalino-terreux ou l'ammonium et de préférence : $Li^+$, $Na^+$, $K^+$, $Ca^{++}$, $NH^+_4$ et ceux dans lesquels $A^-$ représente un halogène, $SCN^-$, $CN^-$, $CO_3^-$ et de préférence: $Cl^-$, $Br^-$, $I^-$.

3) Procédé selon la revendication 1 caractérisé en ce que le composé complexant le cation du sel minéral ionique est un agent séquestrant de formule:

$N[-CHR_1-CHR_2-O-(CHR_3-CHR_4-O)_n-R_5]_3$ (I)

dans laquelle n est un nombre entier supérieur ou égal à 0 et inférieur ou égal à 10 ($0<n<10$), $R_1$, $R_2$, $R_3$ et $R_4$ identiques ou différents représentent un atome d'hydrogène ou un radical alkyle ayant de 1 à 4 atomes de carbone et $R_5$ représente un radical alkyle ou cycloalkyle ayant de 1 à 12 atomes de carbone, un radical phényle ou un radical $-C_mH_{2m}-\varnothing$ ou $C_mH_{2m+1}-\varnothing-$, où m est compris entre 1 et 12 ($1 \leqslant m \leqslant 12$).

4) Procédé selon la revendication 1 caractérisé en ce que le composé complexant est un polyéther macrocycliqueayant de 15 à 30 atomes dans le cycle et constitué de 4 à 10 unités -O-X dans lesquelles X est soit $-CHR_6-CHR_7-$ soit $-CHR_6-CHR_8-CR_9R_7-$, $R_6$, $R_7$, $R_8$ et $R_9$ identiques ou différents étant un atome d'hydrogène ou un radical alkyle ayent de 1 à 4 atomes de carbone, un des X pouvant être $-CHR_6-CHR_8-CR_9R_7-$ quand les unités -O-X comprennent le groupement $-O-CHR_6-CHR_7-$.

5) Procédé selon la revendication 1 caractérisé en ce que le composé complexant est un composé macrocyclique obicyclique de formule générale IIa ou IIb

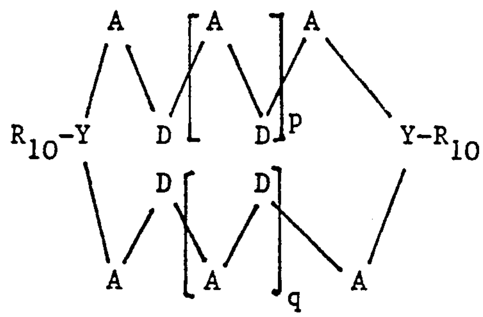

(IIa)

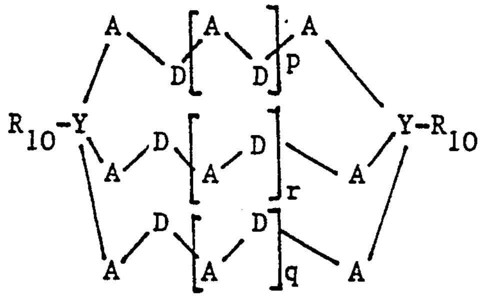

(IIb)

dans lesquelles:

- Y représente N ou P
- A représente un groupement alkylène ayant de 1 à 3 atomes de carbone
- D représente O, S ou $N-R_{11}$ où $R_{11}$ représente un radical alkyle ayant de 1 à 6 atomes de carbone
- $R_{10}$ représente un radical alkyle ayant de 1 à 6 atomes de carbone, p, q et r identiques ou différents sont des nombres entiers compris entre 1 et 5.

6) Procédé selon la revendication 1 caractérisé en ce que le composé complexant est choisi parmi les agents séquestrants, les polyéthers macrocycliques et les composés macrocycliques ou bicycliques greffés sur des supports polymères organiques réticulés.

7) Procédé selon la revendication 6 caractérisé en ce que les agents séquestrants greffés sont constitués par un support polymère organique réticulé et par une pluralité de groupes fonctionnels, fixés sur ledit support, de formule générale:

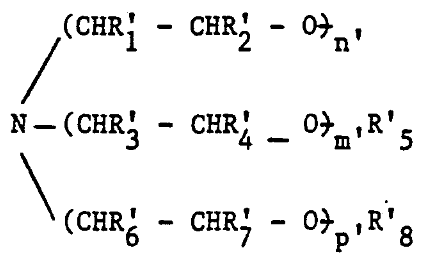 (III)

dans laquelle $R'_1$, $R'_2$, $R'_3$, $R'_4$, $R'_6$ et $R'_7$ identiques ou différents représentent un atome d'hydrogène, un radical alkyle ou cycloalkyle ayant de 1 à 12 atomes de carbone, un radical phényle, un radical $-C_{q'}H_{2q'}-\varnothing-$ ou $C_{q'}H_{2q'+1}-\varnothing-$avec q' supérieur ou égal à 1 et inférieur ou égal à environ 12, et dans laquelle n', m', et p' identiques ou différents sont supérieurs ou égaux à 1 et inférieurs ou égaux à 10.

8) Procédé selon la revendication 3 caractérisé en ce que l'agent séquestrant de formule (I) est choisi parmi:

-la tris(oxa-3 butyl)amine de formule:
$N-(-CH_2-CH_2-O-CH_3)_3$
- la tris(dioxa-3,6 heptyl)amine de formule:
$N-(-CH_2-CH_2-O-CH_2-CH_2-O-CH_3)_3$
- la tris(trioxa-3,6,9 décyl)amine de formule:
$N-(-CH_2-CH_2-O-CH_2-CH_2-O-CH_2-CH_2-O-CH_3)_3$
- la tris(dioxa-3,6 octyl)amine de formule:
$N-(-CH_2-CH_2-O-CH_2-CH_2-O-C_2H_5)_3$
- la tris(trioxa-3,6,9 undécyl)amine de formule:
$N-(-CH_2-CH_2-O-CH_2-CH_2-O-CH_2-CH_2-O-C_2H_5)_3$
- la tris(dioxa-3,6 nonyl)amine de formule:
$N-(-CH_2-CH_2-O-CH_2-CH_2-O-C_3H_7)_3$
- la tris(trioxa-3,6,9 dodécyl)amine de formule:
$N-(-CH_2-CH_2-O-CH_2-CH_2-O-CH_2-CH_2-O-C_3H_7)_3$
- la tris(dioxa-3,6 décyl)amine de formule:
$N-(-CH_2-CH_2-O-CH_2-CH_2-O-C_4H_9)_3$
- la tris(trioxa-3,6,9 tridécyl)amine de formule:
$N-(-CH_2-CH_2-O-CH_2-CH_2-O-CH_2-CH_2-O-C_4H_9)_3$
- la tris(tetra-oxa-3,6,9,12 tridecyl)amine de formule:
$N-(-CH_2-CH_2-O-(-CH_2-CH_2-O)_3-CH_3)_3$
- la tris(hexa-oxa-3,6,9,12,15,18 nonadecyl)amine de formule:
$N-(-Ca_2-CH_2-O-(CH_2-CH_2-O-)_5\ CH_3)_3$
- le tria(dioxa-3,6 méthyl-4 heptyl) amine de formule:
$N-(-CH_2-CH_2-OCH-(CH_3)-CH_2-O-CH_3)_3$
- le tris(dioxa-3,6 diméthyl-2,4 heptyl) amine de formule:
$N-(-CH_2CH-(CH_3)-OCH(CH3)-CH_2-O-CH_3)_3$.

9) Procédé selon la revendication 4 caractérisé en ce que le polyéther macrocyclique est choisi parmi les composés de formule générale:

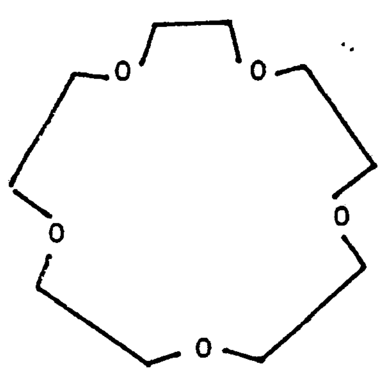

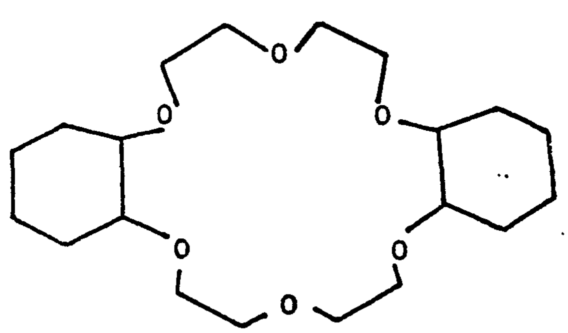

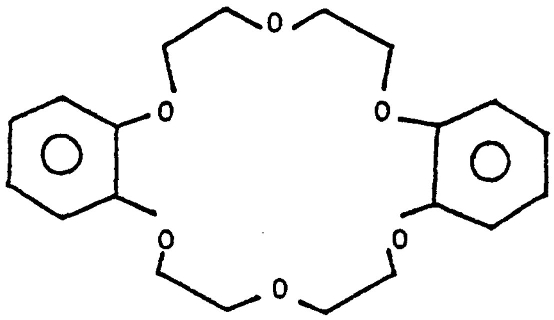

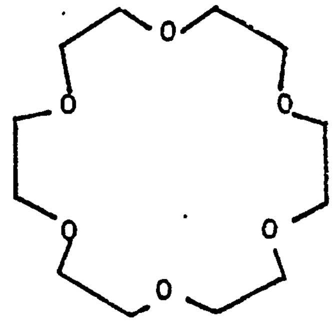

10) Procédé selon la revendication 5 caractèrisé en ce que le composé macrocyclique ou bicyclique est choisi parmi les composès de formule générale:

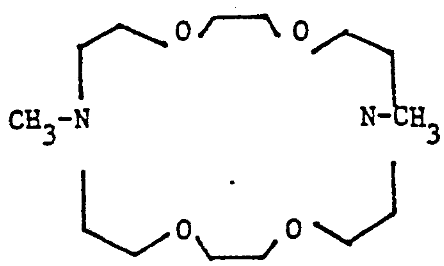

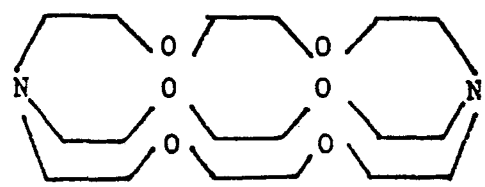

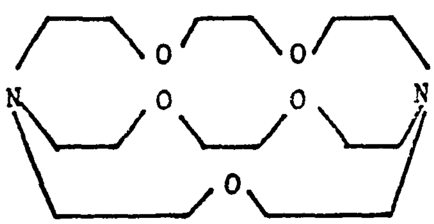

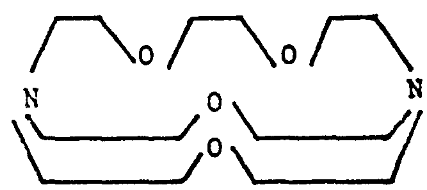

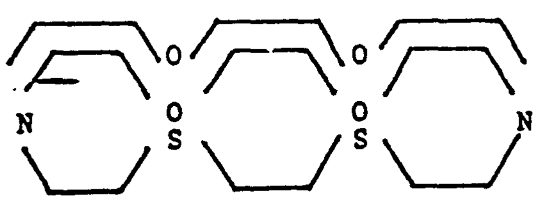

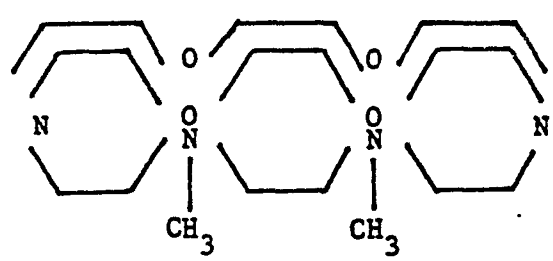

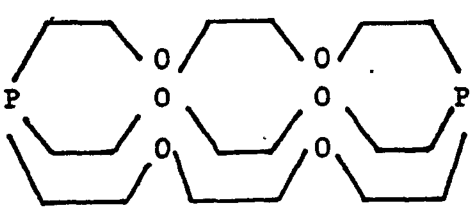

11) Procédé selon la revendication 6 caractérisé en ce que les agents séquestrants greffés sont tels que les groupes fonctionnels de formule gènérale (III) sont choisis parmi les groupes de formules suivantes:

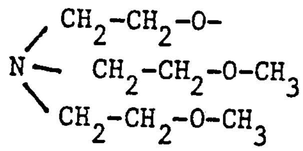

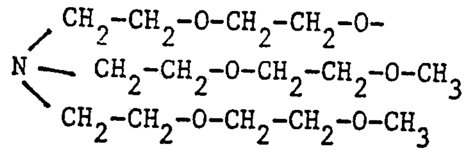

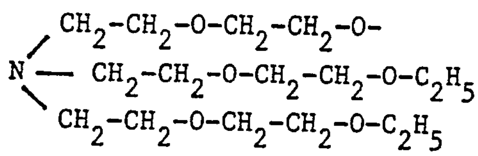

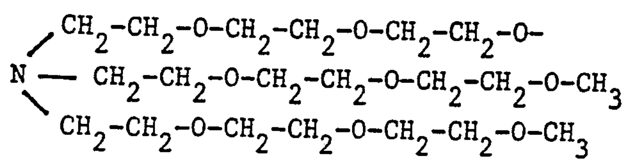

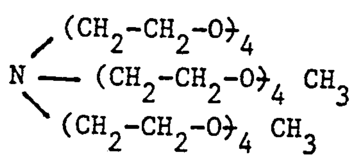

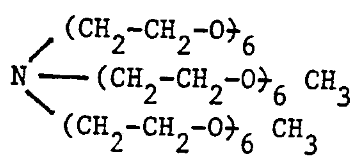

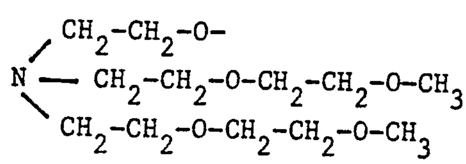

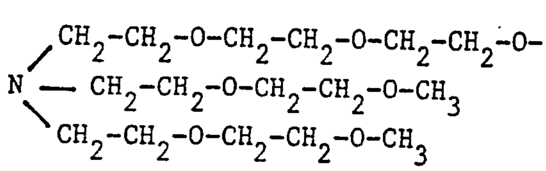

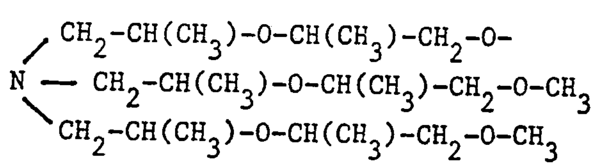

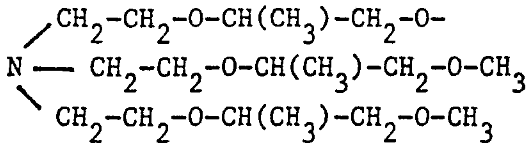

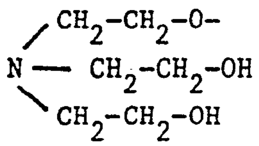

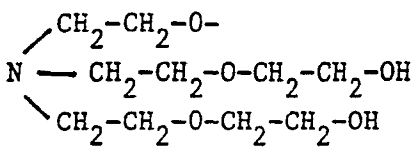

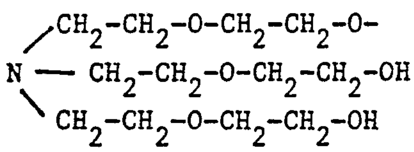

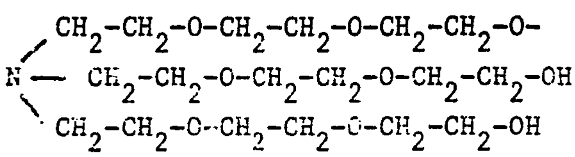

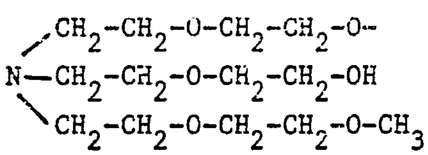

12) Procéedeé selon la revendication 6 ou 11 caractérisé en ce que les polymères organiques sont choisis parmi les polymères derives de composés vinylaromatiques tels que le styrène, le methylstyrène et les copolymères de composés vinylaromatiques et de diènes conjugués en $C_4$-$C_6$ tels que les copolymères du styrène et du butadiène et du styrène et de l'isoprène.

13) Procédé selon la revendication 1 caractérisé en ce que le rapport molaire du composé complexant au sel minéral ionique est compris entre 0,05 et 20 et de préference entre 0,12 et 2.

14) Procédé selon la revendication 1 caractérisé en ce que le rapport molaire du sel minéral ionique au silane de départ est compris entre 1 et 0,0001 et de préférence entre 0,5 et 0,005.

**Patentansprüche**

1. Verfahren zur Dismutation von Silanen, die min denstens eine Si-H-Bindung enthalten, dadurch gekennzeichnet, daß man einerseits ein Silan, das mindestens eine Si-H-Bindung enthält, der allgemeinen Formel $R_nH_mSiX_{4-(n+m)}$, in der R eine Alkyl- oder Arylgruppe, X ein Halogen oder eine Alkoxygruppe, n 0 oder eine ganze Zahl gleich 1, 2 oder 3 und m eine ganze Zahl gleich 1, 2 oder 3 bedeutet,

und andererseits ein katalytisches System umsetzt, das ein ionisches mineralisches Salz der Formel $M^+A^-$ und eine das Kation $M^+$ des genannten Salzes komplexierende Verbindung enthält.

2. Verfahren nach Anspruch 1, dadurch gekennzeichnet, daß das ionische mineralische Salz $M^+A^-$ unter denjenigen ausgewählt wird, bei denen $M^+$ ein Alkali- oder Erdalkalimetall oder Ammonium und vorzugsweise $Li^+$, $Na^+$, $K^+$, $Ca^{++}$, $NH_4^+$ bedeutet, und denjenigen, bei denen $A^-$ ein Halogen, $SCN^-$, $CN^-$, $CO_3^-$ und vorzugsweise $Cl^-$, $Br^-$, $I^-$ bedeutet.

3. Verfahren nach Anspruch 1, dadurch gekennzeichnet, daß die das Kation des ionischen mineralischen

Salzes komplexierende Verbindung ein Sequestrierungsmittel der Formel ist:

$N-[CHR_1CHR_2-O-(CHR_3-CHR_4-O)_nR_5]_3$ (I)

in der n eine ganze Zahl größer oder gleich O und kleiner oder gleich 10 ist ($0<n<10$), $R_1$, $R_2$, $R_3$ und $R_4$, die gleich oder verschieden sein können, ein Wasserstoffatom oder eine Alkylgruppe mit 1 bis 4 Kohlenstoffatomen bedeuten und $R_5$ ein Alkyl- oder Cycloalkylradikal mit 1 bis 12 Kohlenstoffatomen, ein Phenylradikal oder ein Radikal $-C_m H_{2m}-\varnothing$ oder $C_mH_{2m+1}-\varnothing-$ bedeutet, wobei m zwischen 1 und 12 liegt ($1 \leqslant m \leqslant 12$).

4. Verfahren nach Anspruch 1, dadurch gekennzeichnet, da- die komplexierende Verbindung ein makrocyclischer Polyether mit 15 bis 30 Atomen im Ring und bestehend aus 4 bis 10 Einheiten-O-X, in denen X entweder $-CHR_6-CHR_7-$ oder $-CHR_6-CHR_8-CR_9-R_7$-ist, wobei die gleichen oder verschiedenen Reste $R_6$, $R_7$, $R_8$ und $R_9$ ein Wasserstoffatom oder ein Alkylradikal mit 1 bis 4 Kohlenstoffatomen bedeuten und eine der Gruppen X $-CHR_6-CHR_8-CR_9R_7$-sein kann, wenn die Einheiten-O-X die Gruppierung $-O-CHR_6-CHR_7-$ umfassen.

5. Verfahren nach Anspruch 1, dadurch gekennzeichnet, daß die komplexierende Verbindung eine makrocyclische oder bicyclische Verbindung der allgemeinen Formel IIa oder IIb ist

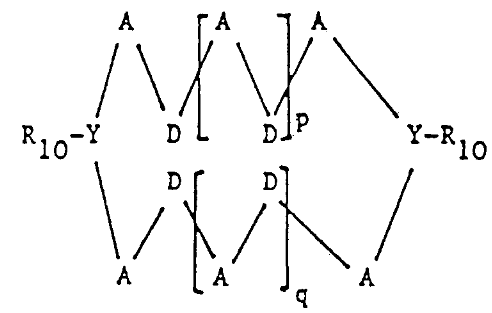

(IIa)

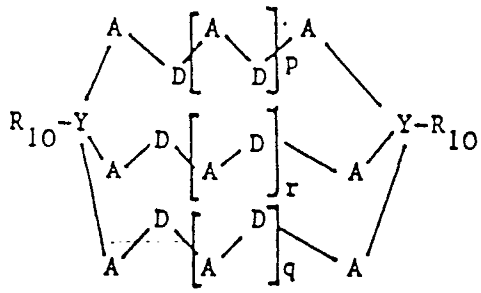

(IIb)

in denen

- Y N oder P bedeutet
- A eine Alkylengruppe mit 1 bis 3 Kohlenstoffatomen bedutet
- D O, S oder $N-R_{11}$ bedeutet, wobei $R_{11}$ ein Alkylradikal mit 1 bis 6 Kohlenstoffatomen ist,
- $R_{10}$ ein Alkylradikal mit 1 bis 6 Kohienstottatomen bedeutet, und

p, q und r, die gleich oder verschieden sein können, ganze Zahlen zwischen 1 und 5 sind.

6. Verfahren nach Anspruch 1, dadurch gekennzeichnet, daß die komplexierende Verbindung ausgewählt wird unter den Seguestrierungsmittel, den makrocyclischen Polyethern und den makrocyclischen oder bicyclischen Verbindungen, die auf vernetzte organische polymere Träger aufgepfropft sind.

7. Verfahren nach Anspruch 6, dadurch gekennzeichnet, daß die gepfropften Sequestrierungsmittel bestehen aus einem vernetzten organischen polymeren Träger und einer Vielzahl funktioneller Gruppen, die an diesen Träger gebunden sind, der allgemeinen Formel

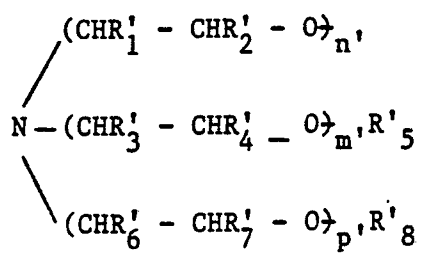

(III)

in der $R'_1$, $R'_2$, $R'_3$, $R'_4$, $R'_6$, und $R'_7$, die gleich oder verschieden sein können, ein Wasserstoffatom, ein Alkyl- oder Cycloalkylradikal mit 1 bis 12 Kohlenstoffatomen, ein Phenylradikal, ein Radikal $-C_{q'}H_{2q'}-\varnothing-$ oder $-C_{q'}H_{2q+1}-\varnothing-$ bedeuten, wobei q' größer oder gleich 1 und kleiner oder gleich etwa 12 ist,

und in der n', m' und p', die gleich oder verschieden sein können, größer oder gleich 1 und kleiner oder gleich 10 sind.

8. Verfahren nach Anspruch 3, dadurch gekennzeichnet, daß das Sequestrierungsmittel der Formel (I) ausgewählt wird unter:

- Tris(oxa-3 butyl)amin der Formel:
  $N-(-CH_2-CH_2-O-CH_3)_3$
- Tris(dioxa-3,6 heptyl)amin der Formel:
  $N-(-CH_2-CH_2-O-CH_2-CH_2-O-CH_3)_3$
- Tris(trioxa-3,6,9 decyl)amin der Formel:
  $N-(-CH_2-CH_2-O-CH_2-CH_2-O-CH_2-CH_2-O-CH_3)_3$
- Tris((dioxa-3,6 octyl)amin der Formel:
  $N-(-CH_2-CH_2-O-CH_2-CH_2-O-C_2H_5)_3$
- Tris(trioxa-3,6,9 undecyl)amin der Formel:
  $N-(-CH_2-CH_2-O-CH_2-CH_2-O-CH_2-CH_2-O-C_2H_5)_3$
- Tris(dioxa-3,6 nonyl)amin der Formel:
  $N-(-CH_2-CH_2-O-CH_2-CH_2-O-C_3H_7)_3$
- Tris(trioxa-3,6,9 dodecyl)amin der Formel:
  $N-(-CH_2-CH_2O-CH_2-CH_2-O-CH_2-CH_2-O-C_3H_7)_3$
- Tris(dioxa-3,6 decyl)amin der Formel:
  $N-(-CH_2-CH_2-O-CH_2CH_2-O-C_4H_9)_3$
- Tris(trioxa-3,6,9 tridecyl)amin der Formel:
  $N-(-CH_2-CH_2-O-CH_2-CH_2-O-CH_2-CH_2-O-C_4H_9)_3$
- Tris(tetra-oxa-3,6,9,12 tridecyl)amin der Formel:
  $N-(-CH_2-CH_2-O-CH_2-CH_2-O)_3-CH_3)_3$
- Tris(hexa-oxa-3,6,9,12,15,18 nonadecyl)amin der Formel:
  $N-(-CH_2-CH_2-O-(CH_2-CH_2-O-)-_5\ CH_3)_3$
- Tris(dioxa-3,6-methyl-4 heptyl)amin der Formel $N-(-CH_2CH_2-OCH-(CH_3)-CH_2-O-CH_3)_3$
- Tris(dioxa-3,6-dimethyl-2,4 heptyl)amin der Formel $N-(-CH_2CH-(CH_3)-OCH(CH_3)-CH_2-O-CH_3)_3$.

9. Verfahren nach Anspruch 4, dadurch gekennzeichnet, daß der makrocyclische Polyether ausgewählt wird unter den Verbindungen der allgemeinen Formel:

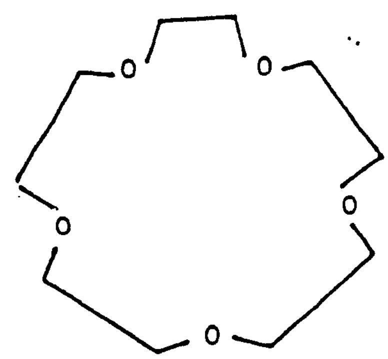

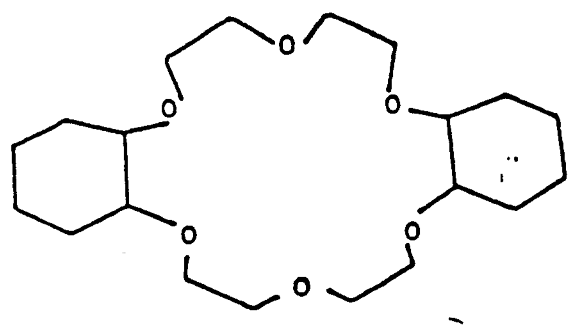

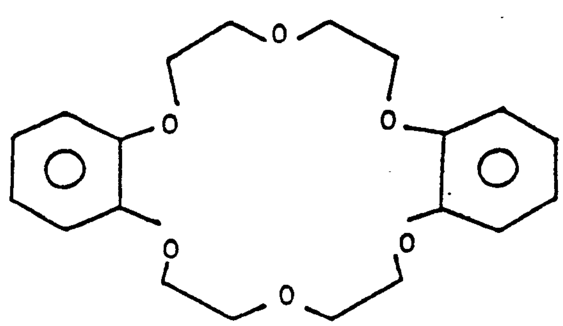

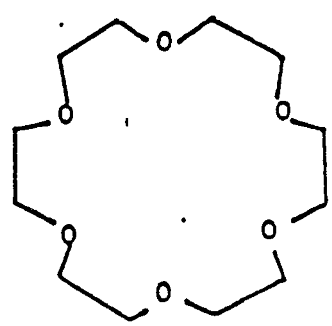

10. Verfahren nach Anspruch 5, dadurch gekennzeichnet, daß die makrocyclischen oder bicyclische Verbindung ausgewählt wird unter den Verbindungen der allgemeinen Formel

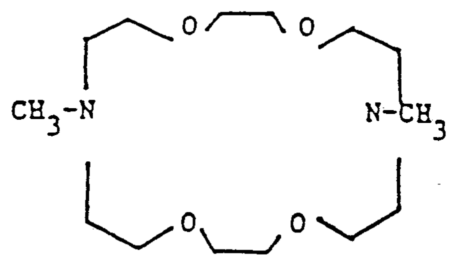

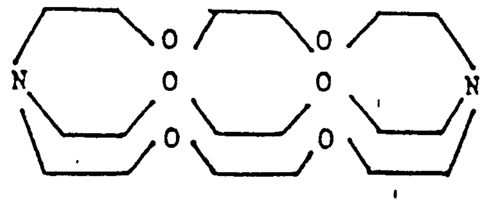

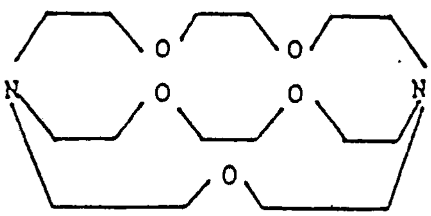

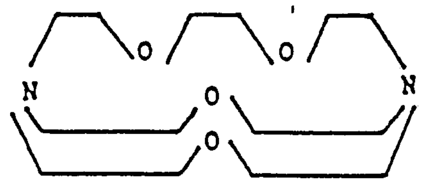

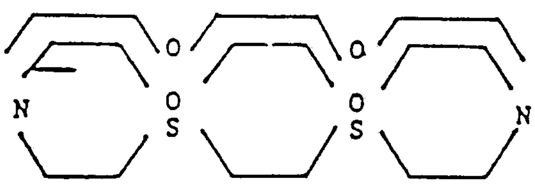

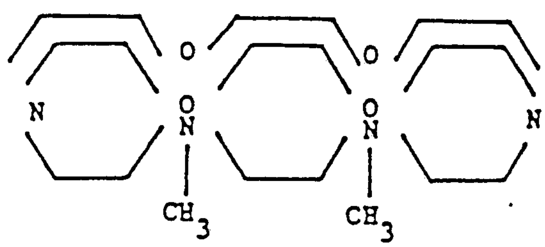

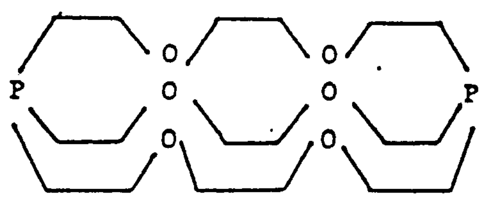

11. Verfahren nach Anspruch 6, dadurch gekennzeichnet, daß die gepfropften Sequestrierungsmittel solche sind, bei denen die funktionellen Gruppen der allgemeinen Formel (III) ausgewählt werden unter den Gruppen der folgenden Formeln:

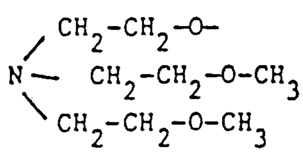

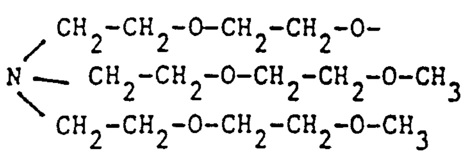

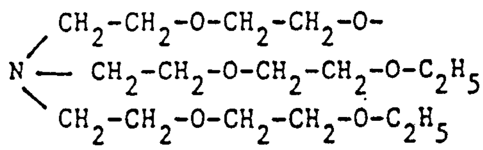

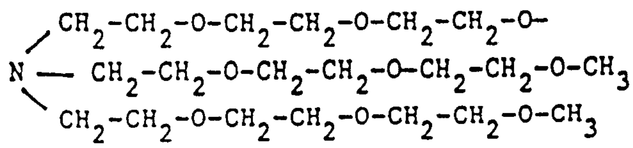

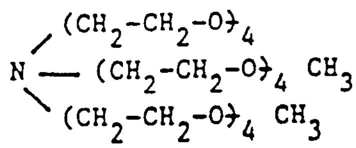

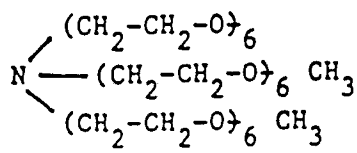

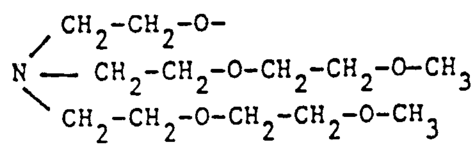

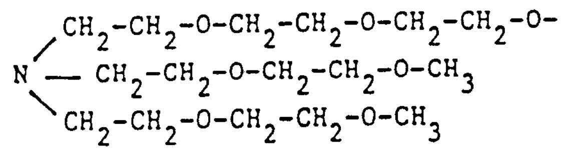

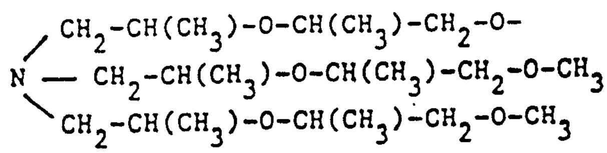

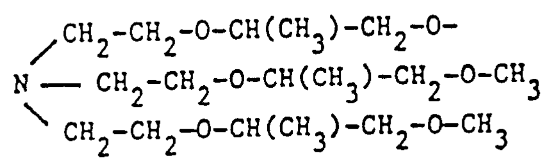

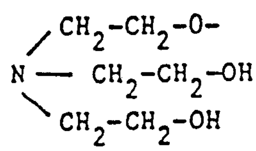

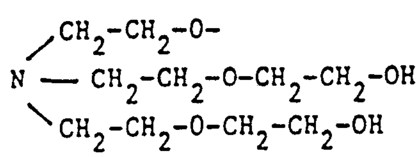

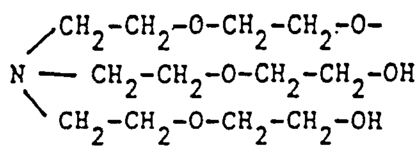

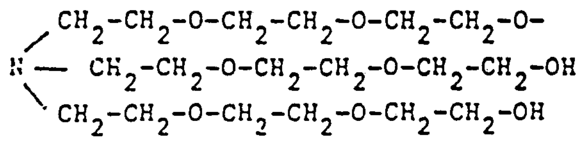

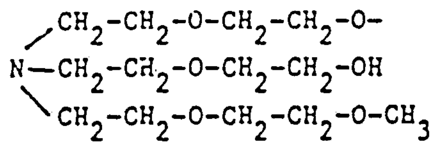

12. Verfahren nach Anspruch 6 oder 11, dadurch gekennzeichnet, daß die organischen Polymeren ausgewählt werden unter den Polymeren, die abgeleitet sind von vinylaromatischen Verbindungen wie Styrol, Methylstyrol und den Copolymeren von vinylaromatischen Verbindungen und konjugierten $C_4$-$C_6$-Dienen wie den Copolymeren des Styrols und des Butadiens und des Styrols und des Isoprens.

13. Verfahren nach Anspruch 1, dadurch gekennzeichnet, daß das molare Verhältnis der komplexierenden Verbindung zu dem ionischen mineralischen Salz zwischen 0,05 und 20 und vorzugsweise zwischen 0,12 und 2 liegt.

14. Verfahren nach Anspruch 1, dadurch gekennzeichnet, daß das molare Verhältnis des ionischen mineralischen Salzes zu dem Ausgangssilan zwischen 1 und 0,0001 und vorzugsweise zwischen 0,5 und 0,005 liegt.

## Claims

1) Process for the disproportionation of silanes comprising at least one Si-H bond, characterized in that there are reacted:

on the one hand, a silane comprising at least one Si-H bond, of general formula $R_nH_mSiX_{4-(n+m)}$ in which R denotes an alkyl or aryl group, X denotes a halogen or an alkoxy group, n is an integer equal to 0, 1, 2 or 3 and m is an integer equal to 1, 2 or 3

and, on the other hand, a catalyst system comprising an ionic inorganic salt of formula $M^+A^-$ and a compound complexing the cation $M^+$ ot the said salt.

2) Process according to Claim 1, characterized in that the ionic inorganic salt $M^+A^+$ is chosen from those in which $M^+$ denotes an alkali metal, alkaline-earth metal or ammonium, and preferably: $Li^+$, $Na^+$, $K^+$, $Ca^{++}$ and $NH_4^+$ and those in which $A^-$ denotes a halogen, $SCN^-$, $CN^->$, $CO_3^-$ and, preferably, $Cl^-$, $Br^-$ and $I^-$.

3) Process according to Claim 1, characterized in that the compound complexing the cation of the ionic inorganic salt is a sequestering agent of formula:

$N[-CHR_1-CHR_2-O-(CHR_3-CHR_4-O)_n-R_5]_3$ (I)

in which n is an integer greater than or equal to 0 and smaller than or equal to 10 ($0 \leqslant n \leqslant 10$), $R_1$, $R_2$, $R_3$ and $R_4$, which are identical or different, denote a hydrogen atom or an alkyl radical containing from 1 to 4 carbon atoms and $R_5$ denotes an alkyl or cycloalkyl radical containing from 1 to 12 carbon atoms, a phenyl radical or a radical $-C_mH_{2m}-\varnothing$ or $C_mH_{2m+1}-\varnothing-$, where m is from 1 to 12 ($1 \leqslant m \leqslant 12$).

4) Process according to Claim 1, characterized in that the complexing compound is a macrocyclic polyether containing from 15 to 30 atoms in the ring and consisting of 4 to 10 -O-X units in which X is either $-CHR_6-CHR7-$ or $-CHR_6-CHR_8-CR_9R_7-$, $R_6$, $R_7$, $R_8$ and $R_9$, which are identical or different, being a hydrogen atom or an alkyl radical containing from 1 to 4 carbon atoms, it being possible for one of the Xs to be $-CHR_6-CHR_8-CR_9R_7-$ when the -O-X units comprise the $-O-CHR_6-CHR_7-$ group.

5) Process according to Claim 1, characterized in that the complexing compound is a macrocyclic or bicyclic compound of general formula IIa or IIb

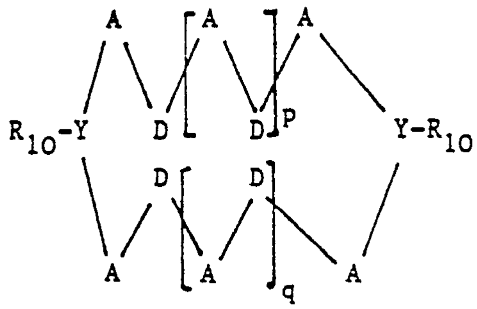

(IIa)

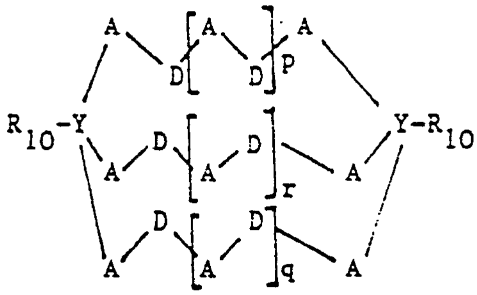

(IIb)

in which:
- Y denotes N or P
- A denotes an alkylene group containing from 1 to 3 carbon atoms
- D denotes O, S or N-$R_{11}$, where $R_{11}$ denotes an alkyl radical containing from 1 to 6 carbon atoms
- $R_{10}$ denotes an alkyl radical containing from 1 to 6 carbon atoms, and p, q and r, which are identical or different, are integers from 1 to 5.

6) Process according to Claim 1, characterized in that the complexing compound is chosen from sequestering agents, macrocyclic polyethers and macrocyclic or bicyclic compounds grafted onto crosslinked organic polymer substrates.

7) Process according to Claim 6, characterized in that the grafted sequestering agents consist of a crosslinked organic polymer substrate and of a plurality of functional groups, attached to the said substrate, of general formula:

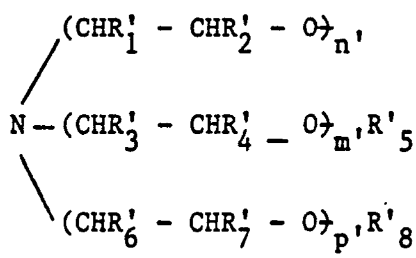

(III)

in which $R_1'$, $R_2'$, $R_3'$, $R_4'$, $R_6'$ and $R_7'$, which are identical or different, denote a hydrogen atom, an alkyl or cycloalkyl radical containing from 1 to 12 carbon atoms, a phenyl radical, a radical -$C_{q'}H_{2q'}$-∅- or $C_{q'}H_{2q'+1}$-∅- with q' greater than or equal to 1 and smaller than or equal to approximately 12, and in which n', m' and p', which are identical or different, are greater than or equal to 1 and smaller than or equal to 10.

8) Process according to Claim 3, characterized in that the sequestering agent of formula (I) is chosen from:
- tris(3-oxabutyl)amine of formula:
$N(CH_2-CH_2-O-CH_3)_3$
- tris(3,6-dioxaheptyl)amine of formula:
$N(CH_2-CH_2-O-CH_2-CH_2-O-CH_3)_3$

- tris(3,6,9-trioxadecyl)amine of formula:
$N(CH_2-CH_2-O-CH_2-CH_2-O-CH_2-CH_2-OCH_3)_3$
- tris(3,6-dioxaoctyl)amine of formula:
$N(CH_2-CH_2-O-CH_2-CH_2-O-C_2H_5)_3$
- tris(3,6,9-trioxaundecyl)amine of formula:
$N(CH_2-CH_2-O-CH_2-CH_2-O-CH_2-CH_2-O-C_2H_5)_3$
- tris(3,6-dioxanonyl)amine of formula:
$N(CH_2-CH_2-O-CH_2-CH_2-O-C_3H_7)_3$
- tris(3,6,9-trioxadodecyl)amine of formula:
$N(CH_2-CH_2-O-CH_2-CH_2-O-CH_2-CH_2-O-C_3H_7)_3$
- tris(3,6-dioxadecyl)amine of formula:
$N(CH_2-CH_2-O-CH_2-CH_2-O-C_4H_9)_3$
- tris(3,6,9-trioxatridecyl)amine of formula:
$N(CH_2-CH_2-O-CH_2-CH_2-O-CH_2-CH_2-O-C_4H_9)_3$
- tris(3,6,9,12-tetraoxatridecyl)amine of formula:
$N(CH_2-CH_2-O-(CH_2-CH_2-O)_3-CH_3)_3$
- tris(3,6,9,12,15,18-hexaoxanonadecyl)amine of formula:
$N(CH_2-CH_2-O-(CH_2-CH_2-O-)_5CH_3)_3$
- tris(3,6,-dioxa-4-methylheptyl)amine of formula:
$N(CH_2-CH_2-OCH-(CH_3)-CH_2-O-CH_3)_3$
and
- tris(3,6-dioxa-2,4-dimethylheptyl)amine of formula:
$N(CH_2-CH(CH_3)-OCH(CH_3)-CH_2-O-CH_3)_3$.

9) Process according to Claim 4, characterized in that the macrocyclic polyether is chosen from the compounds of general formula:

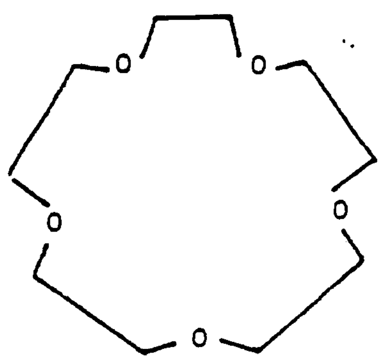

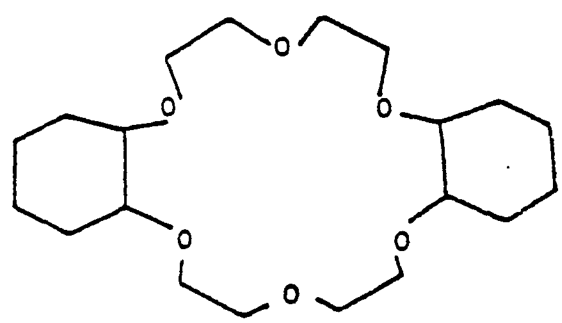

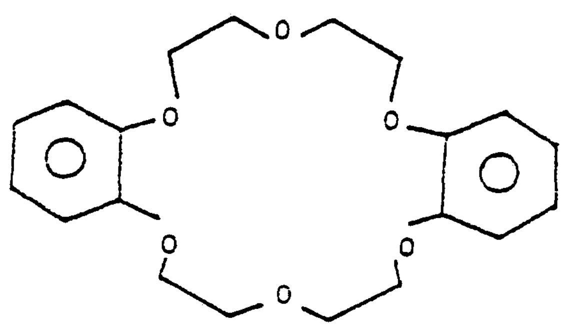

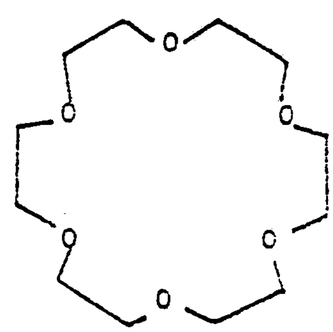

10) Process according to Claim 5, characterized in that the macrocyclic or bicyclic compound is chosen from the compounds of general formula:

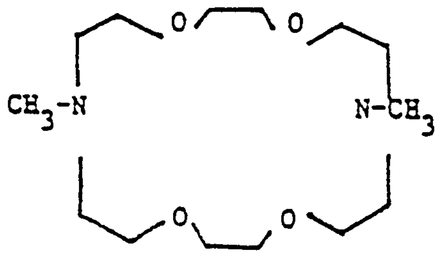

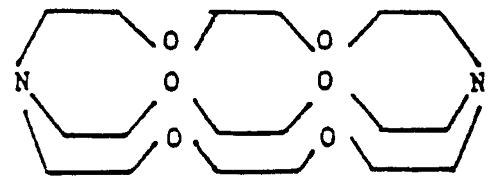

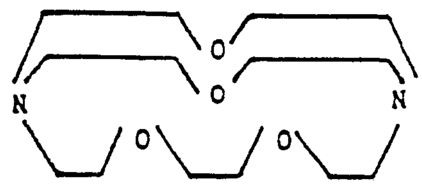

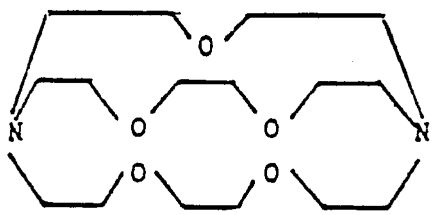

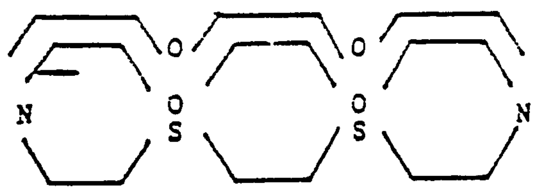

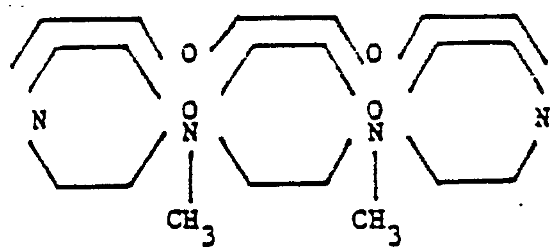

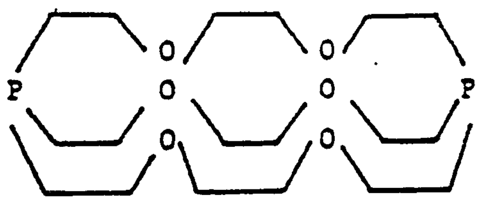

11) Process according to Claim 6, characterized in that the grafted sequestering agents are such that the functional groups of general formula (III) are chosen from the groups of following formulae:

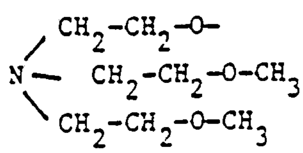

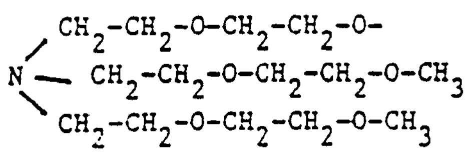

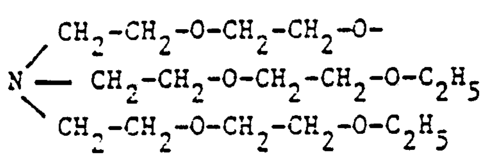

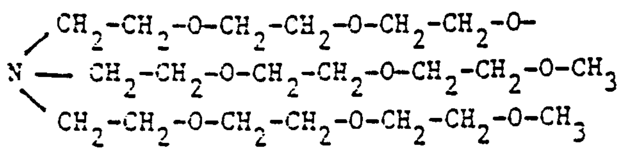

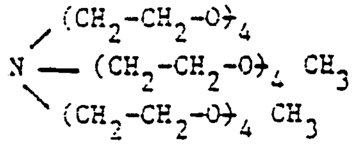

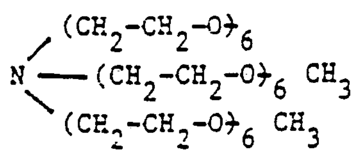

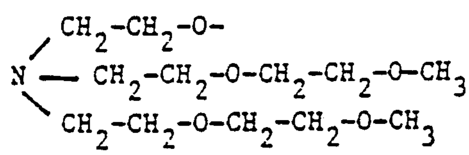

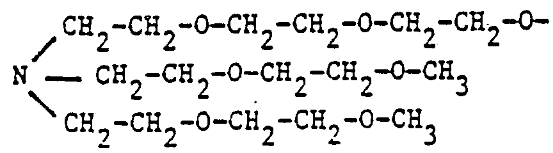

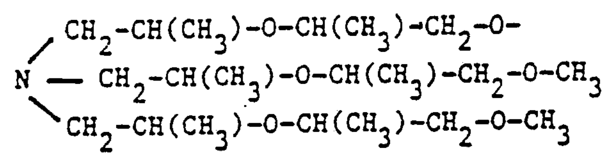

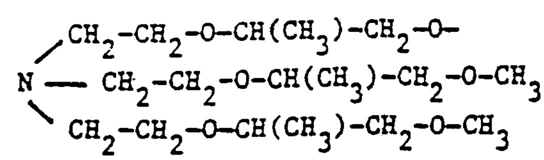

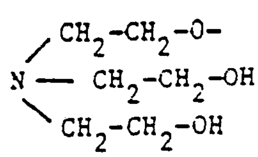

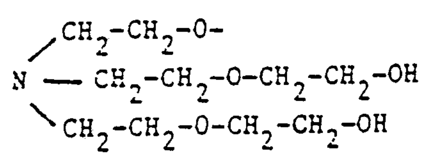

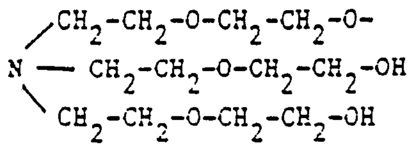

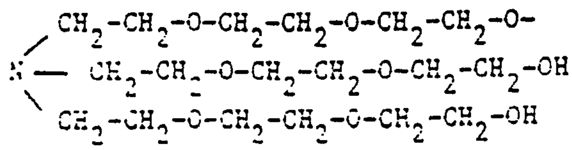

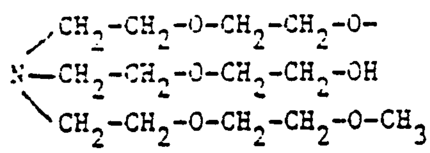

12) Process according to Claim 6 or 11, characterized in that the organic polymers are chosen from the polymers derived from vinylaromatic compounds such as styrene, methylstyrene and copolymers of vinylaromatic compounds with $C_4$-$C_6$ conjugated dienes, such as the copolymers of styrene with butadiene and of styrene with isoprene.

13) Process according to Claim 1, characterized in that the molar ratio of the complexing compound to the ionic inorganic salt is between 0.05 and 20 and preferably between 0.12 and 2.

14) Process according to Claim 1, characterized in that the molar ratio of the ionic inorganic salt to the starting silane is between 1 and 0.0001 and preferably between 0.5 and 0.005.